# EUROPÄISCHE PATENTSCHRIFT

(11) **EP 3 475 374 B1**
(45) Veröffentlichungstag und Bekanntmachung des Hinweises auf die Patenterteilung: **24.02.2021**
(21) Anmeldenummer: 17730073.8
(22) Anmeldetag: 26.05.2017
(51) Int. Cl.: C09D 183/12, C09J 183/12

(54) **EINKOMPONENTENMASSE AUF BASIS VON ALKOXYSILANEN UND VERFAHREN ZUM FUGEN ODER VERGIESSEN VON BAUTEILEN UNTER VERWENDUNG DER MASSE**
ONE-COMPONENT COMPOSITION BASED ON ALKOXYSILANES AND METHOD OF JOINING OR ENCAPSULATING COMPONENTS USING THE COMPOSITION
MASSE À UN COMPOSANT À BASE D'ALCOXYSILANES ET PROCÉDÉ POUR ASSEMBLER OU COULER DES ÉLÉMENTS À L'AIDE DE LA MASSE

(30) Priorität: 24.06.2016 DE 102016111590
(43) Veröffentlichungstag der Anmeldung: 01.05.2019
(73) Patentinhaber: DELO Industrie Klebstoffe GmbH & Co. KGaA, 86949 Windach (DE)
(72) Erfinder: TRUE, Markus, 86836 Untermeitingen (DE); EHRET, Dr. Markus, 82229 Seefeld (DE)
(74) Vertreter: Prinz & Partner mbB
(86) Internationale Anmeldenummer: PCT/EP2017/062750
(87) Internationale Veröffentlichungsnummer: WO 2017/220283

(56) Entgegenhaltungen:
- EP-A1- 1 923 431
- US-A1- 2016 152 861

## Beschreibung

### GEBIET DER ERFINDUNG

Die vorliegende Erfindung betrifft bei Raumtemperatur flüssige und durch Feuchtigkeit härtende Einkomponentenmassen auf Basis von Alkoxysilanverbindungen und photolatenten und/oder wärmelatenten Säuren, insbesondere zur Verwendung beim Verkleben, Abdichten und Beschichten von Bauteilen.

Darüber hinaus betrifft die Erfindung ein Verfahren zum Fügen oder Vergießen von Bauteilen unter Verwendung der Einkomponentenmasse, vorzugsweise ein Verfahren, bei dem die Masse durch Einwirken von Wärme oder aktinischer Strahlung voraktiviert wird.

### TECHNISCHER HINTERGRUND

Im Stand der Technik sind in Gegenwart von Feuchtigkeit härtende Zusammensetzungen auf Basis von silanfunktionellen Polymeren lange bekannt. Diese werden u.a. für Dichtungs-, Beschichtungs- und Klebmassen eingesetzt. Oft ist jedoch die Aushärtungsgeschwindigkeit bei Raumtemperatur gering und der Zusatz basischer, saurer oder metallhaltiger Katalysatoren notwendig.

Die EP 1 591 464 A1 offenbart feuchtigkeitshärtende Polyetherurethane, die an terminalen Positionen mit reaktiven Silangruppen funktionalisiert sind. Derartige Systeme werden typischerweise mit Organotitanat- oder Organozinnverbindungen als Katalysatoren versetzt. Insbesondere titanhaltige Katalysatoren, wie beispielsweise Titantetraisopropanolat, sind jedoch nicht mit stickstoffhaltigen Verbindungen kompatibel. Die beschriebenen Massen lassen sich dadurch nicht in Kombination mit gängigen stickstoffhaltigen Haftvermittlern einsetzen, da diese als Katalysatorgifte wirken. Zinnhaltige Katalysatoren können darüber hinaus oft Spuren von giftigen Tributylzinnderivaten enthalten und sind aus toxikologischen Gründen bedenklich.

Daneben können basische Verbindungen als metallfreie Katalysatoren zur Beschleunigung der Kondensationsreaktion von Silanpolymeren eingesetzt werden.

Die EP 1 923 431 A1 offenbart eine härtbare Zusammensetzung, die ein Vinylpolymer (I) mit im Mittel mindestens einer vernetzbaren Silylgruppe an seinen Enden und einen photolatenten Säurebildner (II) umfasst. Die Zusammensetzung auf der Basis eines Vinylpolymers mit vernetzbaren endständigen Silylgruppen soll eine ausreichend lange Topfzeit gewährleisteten und gleichzeitig bei Bedarf schnell gehärtet werden können. Die gehärteten Produkte sollen eine ausgezeichnete Thermostabilität, Ölbeständigkeit, Witterungsbeständigkeit, mechanische Eigenschaften und Haftfähigkeit aufweisen.

Die US 2016/152861 A1 betrifft eine durch aktinische Strahlung härtbare Harzzusammensetzung zum Beschichten von anorganischen Substraten, wobei die Zusammensetzung 100 Gewichtsteile eines Polymers (A) umfasst, dessen Hauptkette ein (Meth)acrylcopolymer ist und das terminal und/oder an einer Seitenkette mindestens eine Silylgruppe mit einem hydrolisierbaren Rest aufweist. Deweiteren enthält die Zusammensetzung 0,1 bis 20 Gewichtsteile einer Silanverbindung (B1) mit sekundären und/oder tertiären Aminogruppen, und 0,05 bis 20 Gewichtsteile eines photolatenten Säurebildners (C).

Die US 3 979 344 A beschreibt die Verwendung aminofunktioneller Silane zur Katalyse der Feuchtigkeitshärtung von silanterminierten Polyurethanen. Aus der EP 0 819 749 ist weiterhin bekannt, dass der Einsatz von Silanen wie beispielsweise γ-Aminopropyltrimethoxysilan in silanhaltigen Dichtstoffmassen zur Verbesserung der Haftung beiträgt. In beiden Fällen wirkt sich die Verwendung basischer Aminosilane jedoch bereits in geringen Konzentrationen negativ auf die Verarbeitungszeiten aus.

Die EP 1 421 129 A1 beschreibt die Verwendung von α-alkoxysilanterminierten Polyurethanen für einkomponentige, schnell härtende Massen, die in einer bevorzugten Ausführungsform frei von Zinnverbindungen sind. Viele der beispielhaften Massen aus EP 1 421 129 enthalten jedoch immer noch geringe Mengen basischer Aminosilane, die als Härtungskatalysatoren wirken. α-Alkoxysilane zeichnen sich durch eine höhere Reaktivität im Vergleich zu γ-Silanen aus und können damit bei Raumtemperatur mit geringen Mengen an Katalysatoren ausreichend schnell gehärtet werden.

Die WO 2003/014226 offenbart eine Abmischung von α-Silanen und γ-Silanen zur Formulierung feuchtigkeitshärtender Massen. Erst durch zusätzliche Zugabe von speziellen α-Silanen lassen sich lagerstabile Massen formulieren. Dies schränkt die Formulierungsfreiheit ein und erfordert im Einzelfall ein spezifisches Mischungsverhältnis von α-Silanen und γ-Silanen, um stabile Massen zu erhalten.

Dem Fachmann ist bekannt, dass eine Erhöhung der Langzeitlagerstabilität feuchtigkeitshärtender Massen durch gezielte Zugabe von Wasserfängern erreicht werden kann. Diese reagieren mit Wasser, ohne dabei eine Vernetzung der Masse zu initiieren. Die EP 0 819 749 beschreibt beispielsweise den Einsatz von niedermolekularen Alkoxysilanen wie Trimethoxyvinylsilan (VTMO) oder Isocyanaten wie *p*-Toluolsulfonylisocyanat zum Abfangen von Wasser. Aus der DE 19 923 300 A ist die Verwendung von Phosphorsäureestern zur Stabilisierung alkoxysilanfunktioneller Polyurethane in Gegenwart von basischen Füllstoffen bekannt.

Desweiteren sind silanhaltige Formulierungen bekannt, bei denen zusätzlich zur Feuchtehärtung ein weiterer Härtungsmechanismus realisiert wird. So offenbaren US 5 696 179 A, WO 2013/091491 A und DE 10 2010 010 598 A eine zusätzliche Härtung durch Belichten mit aktinischer Strahlung, die durch Zusatz eines (meth)acrylathaltigen Reaktivverdünners erreicht wird. Daneben ist aus der WO 2006/014786 A bekannt, dass eine Dualhärtung auch durch Verwendung alkoxysilanterminierter Oligomere erreicht werden kann, die neben feuchtigkeitshärtenden Gruppen gleichzeitig strahlungshärtende (Meth)acrylatgruppierungen im Molekül enthalten.

Prozesstechnisch wünschenswert ist ein variables Offenzeitfenster zwischen einer Bestrahlung der Masse und dem Fügen der Bauteile zur Herstellung einer Klebeverbindung. Dies ermöglicht es, eine Masse durch aktinische Strahlung auf einem ersten Bauteil zu aktivieren, bevor dieses mit einem zweiten Bauteil in Verbindung gebracht wird. Auf diese Weise können auch nicht durchstrahlbare Fügepartner durch eine Voraktivierung der Masse miteinander verklebt werden.

Durch Bestrahlen aktivierbare Kleb- und Dichtstoffmassen mit kationisch polymerisierbaren Komponenten sind in der DE 3 909 688 A1 beschrieben. Die Massen werden vor dem Fügen in durchstrahlbaren Vorratsbehältern wie beispielsweise transparenten Kartuschen durch Bestrahlung mit Licht im Wellenlängenbereich von 400-600 nm aktiviert. Nach der Aktivierung weisen die Massen eine maximale Offenzeit im Bereich von Stunden auf. Die Massen erlauben zwar eine höhere Prozessvielfalt, verbleiben jedoch nach Aktivierung auch nur über ein sehr beschränktes Zeitfenster im Bereich weniger Stunden dosierbar.

Aus der US 2007/0219285 sind ferner zweistufig härtbare Kleb- und Dichtstoffmassen auf Basis von acrylat- und silanhaltigen Polymeren bekannt. Diese Massen enthalten neben einem radikalischen Photoinitiator auch eine photolatente Säure, die nach erfolgter Bestrahlung die Feuchtehärtung katalysiert. Die anfängliche Vernetzung erfolgt dabei durch radikalische Polymerisation der acrylathaltigen Komponenten. Für ausreichende Anfangsfestigkeiten ist ein hoher Acrylatanteil nötig.

Die EP 0 966 503 A offenbart eine zum Bedarfszeitpunkt härtende feuchtigkeitsempfindliche Zusammensetzung auf Basis von reaktiven Silanen und photolatenten Säuren als Katalysatoren. Als säurebildendes Mittel können insbesondere Oniumverbindungen verwendet werden. Die photolatenten Säuren kommen dabei in relativ hohen Konzentrationen zum Einsatz. Die beschriebenen Massen werden als Trennbeschichtungen eingesetzt. Die silanfunktionellen Verbindungen tragen ferner im polymeren Grundgerüst bevorzugt fluorierte Gruppen. Der Einsatz zum Kleben und Abdichten wird durch EP 0 966 503 nicht offenbart. Ebenso werden keine Aussagen zur Verarbeitbarkeit und Langzeitlagerstabilität der Zusammensetzungen getroffen.

Aus der WO 2005/100482 A ist eine lichtinduzierte feuchtigkeitshärtende Zusammensetzung auf Basis eines silylterminierten Polymers und einer photolatenten Base bekannt, die frei von (meth)acrylathaltigen Reaktivverdünnern ist. Besonders bevorzugt ist die Verwendung α-silanterminierter Polymere auf Basis von Polyurethanen, Polyestern und Polyethern. Nachteilig bei diesem Ansatz ist, dass in derartigen Formulierungen die photolatente Base bereits ohne Belichtung in Gegenwart von Feuchtigkeitsspuren eine Vernetzung der Silane katalysiert und damit nur eine begrenzte Verarbeitungszeit gegeben ist. Ferner führt der in WO 2005/100482 A beschriebene Einsatz von γ-Aminopropyltrimethoxysilan als Haftvermittler und Cokatalysator zusätzlich zu einer Reduzierung der Offenzeiten. So erfolgt bereits bei Formulierungen, die nur 1 Gew.-% des entsprechenden Aminosilans enthalten, auch ohne Belichtung eine Hautbildung innerhalb weniger Stunden nach dem Dosieren.

Die WO 2005/100482 A beschreibt ferner ein Fügeverfahren für photoaktivierbare, α-silanhaltige Massen, bei dem eine Prozessabfolge aus Dosieren, Einwirken von Feuchtigkeit und Belichtung frei verschachtelt gewählt werden kann. Bedingt durch die Anwesenheit von Stickstoffbasen zeigen die Massen jedoch eine niedrige inhärente Lagerstabilität, was im Falle eines Produktionsstillstandes zu einem Verstopfen der Dosiereinrichtungen oder zu einem vorzeitigen unerwünschten Aushärten der Masse auf einem Bauteil führen kann. Gleichzeitig liegen die Hautbildungszeiten nach Belichtung für die beschriebenen Massen im Bereich von mehreren Minuten. Somit ist keine schnelle Fixierung von Bauteilen möglich, da es lange dauert, bis ausreichende Anfangsfestigkeiten zwischen den Fügepartnern erreicht werden. Die Offenzeiten der bekannten Zusammensetzungen lassen sich zwar durch eine Verringerung der basischen Anteile in der Formulierung verlängern. Dies wirkt sich jedoch nachteilig auf die Hautbildungszeiten nach Bestrahlung aus.

In industriellen Fügeprozessen ist neben einer langen Verarbeitbarkeit, einer hohen Lagerstabilität und einer schnellen Härtungscharakteristik oft eine Flexibilität in Bezug auf das Prozessieren entsprechender Massen gewünscht. Idealerweise sollten die silanhaltigen Massen bei einem Produktionsstillstand nicht aushärten und benetzte Rohrleitungen oder sonstige mechanische Teile nicht verkleben. Falls die silanhaltigen Massen während eines längeren Produktionsstillstands aushärten, müssen aufwendige Spülvorgänge durchgeführt und Dosiernadeln oder Zuführungsleitungen ausgetauscht werden. Dementsprechend sind lange Offenzeiten von Vorteil. Idealerweise sollte eine härtbare Masse selbst in Gegenwart von Luftfeuchtigkeit über einen längeren Zeitraum nicht zum Gelieren neigen und im flüssigen Zustand verbleiben. Erst bei Aktivierung durch aktinische Strahlung oder Erwärmen ist eine rasche Härtung erwünscht.

### ZUSAMMENFASSUNG DER ERFINDUNG

Der Erfindung liegt die Aufgabe zugrunde, die Nachteile der aus dem Stand der Technik bekannten Zusammensetzungen zu vermeiden und feuchtigkeitshärtende Massen bereitzustellen, die über einen langen Zeitraum auch in Gegenwart von Feuchtigkeit lagerstabil sind und nach dem Dosieren ohne Bestrahlung noch möglichst lange flüssig bleiben, jedoch nach Bestrahlung in kurzer Zeit eine Haut bilden und hohe Anfangsfestigkeiten erzielen.

Vorzugsweise sollen die Massen voraktivierbar sein. Ferner ist insbesondere für Vergussanwendungen wünschenswert, wenn die Aktivierung der Masse und die anschließende Applikation durch eine Dosiervorrichtung räumlich und zeitlich getrennt erfolgen können. Damit können sich Produktionsstillstände nicht negativ auf die Lagerstabilität bereits aktivierter Massen auswirken. Bevorzugt sollte sich die Härtungscharakteristik der aktivierten Massen auch über einen langen Zeitraum nicht verändern.

Diese Aufgabe wird erfindungsgemäß durch eine einkomponentige feuchtigkeitshärtende Masse gemäß Anspruch 1 gelöst.

Vorteilhafte Ausführungsformen der erfindungsgemäßen Massen sind in den Unteransprüchen angegeben.

Gegenstand der Erfindung ist ferner die Verwendung der erfindungsgemäßen Massen als Klebstoff oder Dichtstoff für das Verkleben, Vergießen, Abdichten und Beschichten von Substraten, insbesondere im Elektronikbereich.

Die erfindungsgemäße Masse umfasst (A) eine oder mehrere mindestens difunktionelle Silanverbindungen mit mindestens zwei Alkoxysilangruppen, (B) mindestens eine monofunktionelle Silanverbindung mit nur einer Alkoxysilangruppe und/oder Derivate der monofunktionellen Silanverbindung mit teilkondensierten oder verbrückten Alkoxysilangruppen, und (C) mindestens einen Säurebildner, der unter Einwirkung von aktinischer Strahlung oder Wärme aktivierbar ist und eine Säure freisetzt. Darüber hinaus können in den erfindungsgemäßen Massen weitere Zusatzstoffe (D) enthalten sein.

Die Masse ist bei Raumtemperatur flüssig und enthält außer dem Säurebildner keine weiteren Katalysatoren für die Feuchtigkeitshärtung von Alkoxysilanen.

Die mindestens difunktionelle Silanverbindung umfasst eine oder mehrere mindestens difunktionelle α-Alkoxysilanverbindungen.

Die vorliegende Erfindung zeichnet sich dadurch aus, dass die im Stand der Technik beschriebenen Nachteile erfolgreich überwunden werden. Dies gelingt durch das Bereitstellen von lagerstabilen, wahlweise voraktivierbaren, feuchtigkeitshärtenden Einkomponentenmassen auf Basis von silanhaltigen Verbindungen und latenten Säuren unter Verzicht auf den Zusatz von sonstigen Katalysatoren für die Feuchtehärtung von Alkoxysilanen, mit Ausnahme von unvermeidbaren Verunreinigungen. Die erfindungsgemäßen Massen bleiben auch in Gegenwart von Feuchtigkeit über einen Zeitraum von mindestens 24 Stunden im flüssigen Zustand und härten erst nach erfolgter Bestrahlung und/oder thermischer Aktivierung des Säurebildners aus. Umgekehrt bleiben aktivierte Massen ebenfalls über einen Zeitraum von mindestens 24 Stunden flüssig, solange keine Feuchtigkeit zutritt. Somit müssen für eine vollständige Aushärtung der Massen zwei voneinander unabhängige Bedingungen erfüllt sein.

Durch Variation der Bestrahlungsdosis und verschiedener Formulierungsparameter lassen sich die Offenzeiten der Formulierung anpassen, so dass eine Voraktivierung der erfindungsgemäßen Massen erfolgen kann. Eine Voraktivierung der Massen ist insbesondere dann von Vorteil, wenn nicht durchstrahlbare Substrate vergossen oder verklebt werden sollen. Darüber hinaus zeichnen sich die Massen dadurch aus, dass nur geringe Mengen an latenter Säure und keine weiteren der sonst für die Feuchtigkeitshärtung üblichen Härtungskatalysatoren benötigt werden, um eine rasche und vollständige Hautbildung bei Raumtemperatur zu erreichen. Die beschriebenen Massen eignen sich bevorzugt zum Verkleben, Abdichten und Beschichten.

Gemäß einer bevorzugten Ausführungsform der feuchtehärtenden Masse sind die mindestens zwei Alkoxysilangruppen der difunktionellen Silanverbindung an einen polymeren Rest gebunden, vorzugsweise terminal an den polymeren Rest.

Erfindungsgemäß umfasst die mindestens difunktionelle Silanverbindung eine oder mehrere mindestens difunktionelle α-Alkoxysilanverbindungen. Die α-Alkoxysilanverbindungen sind besonders reaktiv und ermöglichen daher eine Bereitstellung von feuchtehärtenden Massen, die nach Aktivierung des latenten Säurebildners innerhalb kürzester Zeit eine Hautbildung zeigen. Die mindestens difunktionelle Silanverbindung kann aus einer oder mehreren α-Alkoxysilanverbindungen bestehen.

Gemäß einer weiteren Ausführungsform umfasst die difunktionelle Silanverbindung eine oder mehrere mindestens difunktionelle α-Alkoxysilanverbindungen und wahlweise eine oder mehrere weitere mindestens difunktionelle Alkoxysilanverbindungen mit wenigstens zwei Alkoxysilangruppen, wobei die Alkoxysilangruppen ein über eine Alkylengruppe an ein Heteroatom gebundenes Si-Atom umfassen, wobei die Alkylengruppe mindestens zwei C-Brückenatome aufweist, bevorzugt 3 bis 6 C-Brückenatome. Besonders bevorzugt ist die weitere mindestens difunktionelle Silanverbindung ein mindestens difunktionelles γ-Alkoxysilan, bei dem die Alkylengruppe eine wahlweise substituierte Propylengruppe ist.

Zusätzlich zur mindestens difunktionellen Silanverbindung enthält die erfindungsgemäße Masse mindestens eine monofunktionelle Silanverbindung, die nur eine einzelne Alkoxysilangruppe aufweist. Die monofunktionelle Silanverbindung ist bevorzugt eine monomere, insbesondere niedermolekulare Verbindung und dient insbesondere als Feuchtefänger. Zusätzlich trägt die monofunktionelle Silanverbindung bei der Aushärtung der Massen durch Vernetzung der Alkoxysilangruppen zum Haftungsaufbau bei. Neben klassischen Alkoxyvinylsilanen können auch monofunktionelle α-Alkoxysilane oder γ-Alkoxysilane zum Einsatz kommen. Ferner können Derivate der monofunktionellen Silanverbindung als Feuchtefänger eingesetzt werden, die durch eine Teilhydrolyse oder eine Verbrückung der Alkoxysilangruppen mit zweiwertigen Alkoholen erhältlich sind. Diese Derivate werden im Sinne der Erfindung ebenfalls als monofunktionelle Silanverbindungen verstanden.

Die erfindungsgemäße Masse ist bevorzugt wasserfrei. Spuren von Wasser, das während der Herstellung der Masse gegebenenfalls durch andere Bestandteile wie z.B. Füllstoffe in die Masse eingebracht wird, können durch Umsetzung mit der monofunktionellen Silanverbindung abgefangen werden.

Der in den erfindungsgemäßen Massen enthaltene Säurebildner stellt eine latente Säure dar und dient als Katalysator für die Härtung der Alkoxysilankomponenten in der Masse. "Latent" bedeutet hier, dass der Säurebildner erst nach einer Aktivierung, beispielsweise durch Wärme oder Belichtung, aktiv wird und eine Säure freisetzt, welche dann in Gegenwart von Feuchtigkeit eine Hydrolyse der Alkoxysilangruppen auslöst und eine schnelle Hautbildung und/oder Aushärtung der Massen bewirkt. In Gegenwart des nicht aktivierten Säurebildners bleiben die Massen bei Raumtemperatur dagegen selbst unter Einfluss von Feuchtigkeit mindestens 24 Stunden lang flüssig. Bevorzugt können die Massen vor Aktivierung des Säurebildners bei Raumtemperatur in Gegenwart von Luftfeuchtigkeit über mindestens 3, bevorzugt mindestens 7 Tage flüssig bleiben.

Erreicht wird dies dadurch, dass die Massen mit Ausnahme des Säurebildners keine weiteren sauren, basischen oder metallhaltigen Verbindungen enthalten, welche die Vernetzung von Alkoxysilanen unter Einwirkung von Feuchtigkeit beschleunigen können. Derartige Katalysatoren sind im Stand der Technik umfangreich beschrieben. Bei diesen bekannten Katalysatoren handelt es sich überwiegend um Carbonsäuren wie beispielsweise Acrylsäure, Methacrylsäure, Diacrylsäure, Maleinsäure, Itaconsäure und Essigsäure, Organosulfonsäuren wie Trifluormethansulfonsäure und Toluolsulfonsäure sowie anorganische Säuren wie Phosphorsäuren und Phosphorsäureester, Salzsäure und Borsäure. Als Basen sind insbesondere Stickstoffverbindungen wie aliphatische primäre, sekundäre und teritäre Monoamine, Diamine und Polyamine, aromatische Amine, zyklische und heterozyklische Amine sowie Aminosilane, aber auch Amidine und latente Amine wie Aldimine, Ketimine, Enamine und Oxazolidine beschrieben. Außerdem ist die Verwendung von organischen Schwermetallverbindungen als Katalysatoren für die Feuchtehärtung von Silanen bekannt, beispielsweise von Carboxylaten oder anderen organischen Verbindungen von Blei, Eisen, Titan, Zink, Zinn, Bismut, Kobalt, Zirkonium, Vanadium und Nickel.

Die Abwesenheit von Katalysatoren für die Feuchtigkeitshärtung im Sinne der Erfindung schließt jedoch das Vorhandensein solcher Verbindungen als Verunreinigungen nicht aus. Jedoch liegen diese Verbindungen in den erfindungsgemäßen Massen nicht in einer für die Beschleunigung der Silanvernetzung unter Feuchtigkeitseinwirkung wirksamen Menge vor und sind insbesondere nicht absichtlich als Zusatz zu den erfindungsgemäßen Massen zugegeben.

Die erfindungsgemäßen Massen können als Kleb- oder Dichtstoff für das Verkleben, Vergießen, Abdichten und Beschichten von Substraten verwendet werden. Bevorzugt werden die Massen als Kleb- oder Dichtstoff für die Fixierung oder das Vergießen von Bauteilen verwendet werden, insbesondere für Bauteile, die nicht durchstrahlbar sind oder wenigstens eine Schattenzone oder Kapillarspalten aufweisen, in denen durch unzureichende Belichtung keine Strahlenhärtung durchführbar ist.

Gegenstand der Erfindung ist ferner ein Verfahren zum Fügen oder Vergießen von Substraten unter Verwendung der erfindungsgemäßen Masse, wobei das Verfahren die folgenden Schritte umfasst:
Dosieren der Masse auf ein Substrat;
Aktivieren der Masse auf dem Substrat unter Freisetzung einer Säure aus dem Säurebildner und unter Zutritt von Feuchtigkeit;
Zuführen eines zweiten Substrat auf die bestrahlte Masse innerhalb einer Offenzeit unter Bildung einer Klebschicht; und
Einhalten einer Wartezeit bis zum Erreichen einer Handfestigkeit der Klebschicht;
wobei die Zeit zwischen Dosieren und Aktivieren der Masse in Gegenwart von Feuchtigkeit 24 Stunden oder länger betragen kann, wobei die Hautbildungszeit weniger als 5 Minuten beträgt und die Wartezeit in einem Bereich von 1 Sekunde bis 2 Minuten liegt.

In einem weiteren Aspekt betrifft die Erfindung ein Verfahren zum Fügen oder Vergießen von Bauteilen, bei dem der Zeitpunkt des Dosierens und Aushärtens, in Abwesenheit von Feuchtigkeit, nach Aktivierung der Massen durch Wärme oder aktinische Strahlung über einen Zeitraum von mindestens 24 Stunden frei gewählt werden kann. Ein solches Verfahren ist dadurch gekennzeichnet, dass die Masse unter Ausschluss von Feuchtigkeit durch Belichten mit aktinischer Strahlung und/oder Erwärmen auf eine Temperatur oberhalb der Zersetzungstemperatur des Säurebildners aktiviert wird.

Die auf diese Weise aktivierten Massen können innerhalb einer gewünschten Offenzeit vergossen oder in einem weiteren Fügeverfahren verarbeitet werden.

Bevorzugt werden die Massen in einem geschlossenen durchstrahlbaren Vorratsbehältnis durch Belichten und/oder Erwärmung aktiviert, und die anschließende Applikation durch eine Dosiervorrichtung kann räumlich und zeitlich getrennt erfolgen. In einer weiteren Ausführungsform kann die Aktivierung der Massen unter Ausschluss von Feuchtigkeit in einer Durchflussapparatur erfolgen.

Unter Ausschluss von Feuchtigkeit bleiben die so aktivierten Massen bei Raumtemperatur mindestens 24 h, bevorzugt mindestens 3 Tage, besonders bevorzugt mindestens 7 Tage im flüssigen Zustand.

### AUSFÜHRLICHE BESCHREIBUNG BEVORZUGTER AUSFÜHRUNGS-FORMEN

Die Erfindung wird im Folgenden anhand von bevorzugten Ausführungsformen ausführlich und beispielhaft beschrieben, die jedoch nicht in einem einschränkenden Sinn verstanden werden sollen.

Erfindungsgemäß werden bei Raumtemperatur flüssige und durch Feuchtigkeit härtende Einkomponentenmassen gemäß Anspruch 1 bereitgestellt, die (A) eine mindestens difunktionelle Silanverbindung mit mindestens zwei Alkoxysilangruppen, (B) mindestens eine monofunktionelle Silanverbindung mit nur einer Alkoxysilangruppe und/oder Derivate der monofunktionellen Silanverbindung mit teilkondensierten oder verbrückten Alkoxysilangruppen sowie (C) mindestens einen Säurebildner umfassen. Darüber hinaus können in den vorliegen erfindungsgemäßen Massen weitere Zusatzstoffe (D) enthalten sein.

"Einkomponentig" oder "Einkomponentenmasse" bedeutet in diesem Zusammenhang, dass die genannten Komponenten zusammen in einer gemeinsamen Formulierung vorliegen, also nicht getrennt voneinander gelagert sind.

### Komponente (A): Difunktionelle Silanverbindung

Die mindestens difunktionelle Silanverbindung mit mindestens zwei Alkoxysilangruppen entspricht vorzugsweise der allgemeinen Formel (I): 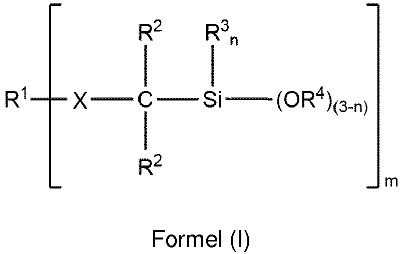
in der R¹ ein wenigstens zweibindiger organischer Rest ist,
jedes R² unabhängig ein aus der aus Wasserstoff, linearen, verzweigten, zyklischen, gesättigten, ungesättigten und aromatische Kohlenwasserstoffen bestehenden Gruppe ausgewählter monovalenter Rest ist, der gegebenenfalls halogensubstituiert und/oder durch 1 bis 3 Heteroatome unterbrochen sein kann,
jedes R³ unabhängig ein monovalenter Rest ist, der aus der Gruppe der linearen, verzweigten, zyklischen, gesättigten, ungesättigten und aromatischen Kohlenwasserstoffen ausgewählt ist, und der gegebenenfalls halogensubstituiert oder durch 1 bis 3 Heteroatome unterbrochen sein kann,
jedes R⁴ unabhängig ein aus der aus Wasserstoff, linearen, verzweigten, zyklischen, gesättigten, ungesättigten und aromatische Kohlenwasserstoffen bestehenden Gruppe ausgewählter monovalenter Rest ist, der wahlweise halogensubstituiert oder durch 1 bis 3 Heteroatome unterbrochen sein kann,
X ein heteroatomhaltiger zwei- oder dreibindiger Rest ist, der durch ein Heteroatom, insbesondere Sauerstoff, Stickstoff oder Schwefel, an die Gruppe -CR²₂-SiR³ₙ(OR⁴)(₃₋ₙ) gebunden ist, und
m mindestens 2, bevorzugt 2 bis 9, weiter bevorzugt 2 bis 4 ist; und
n = 0 bis 2 ist.

Bevorzugt ist R¹ ein aus der aus (i) linearen oder verzweigten, gesättigten oder ungesättigten Alkylresten mit 1 bis 8 C-Atomen, gegebenenfalls unterbrochen durch 1 bis 3 Heteroatome, (ii) gesättigten oder ungesättigten Cycloalkylresten mit 3-9 C-Atomen, gegebenenfalls unterbrochen durch 1 bis 3 Heteroatomen, (iii) aromatischen Resten mit 5 bis 10 C-Atomen, (iv) Polyolefin, Polyether, Polyamid, Polyester, Polycarbonat, Polyurethan, Polyharnstoff, Polybutadien, hydriertes Polybutadien, Polysiloxane oder Polyacrylat bestehenden Gruppen ausgewählter Rest, wobei R¹ jeweils unsubstituiert sein oder weitere Substituenten tragen kann.

Besonders bevorzugt ist R¹ ein polymerer Rest der vorgenannten Gruppe (iv), vorzugsweise mit terminalen Alkoxysilangruppen gemäß Formel (I).

Bei den Verbindungen der allgemeinen Formel (I) handelt es sich um sogenannte α-(Alkoxy)silanverbindungen, die dadurch gekennzeichnet sind, dass die (Alkoxy)silangruppen in α-Position zu einem Heteroatom wie Sauerstoff, Schwefel oder Stickstoff enthalten sind. Dabei ist die Alkoxysilangruppe mittels einer substituierten oder unsubstituierten Methylengruppe von dem Heteroatom getrennt.

Der Rest R¹ steht vorzugsweise für ein Polymergrundgerüst oder Copolymergerüst auf Basis eines Polyethers, Polyesters, Polycarbonats, Polyurethans, Polyamids oder Polyharnstoffs.

Besonders bevorzugt steht der Rest R¹ für einen Polyurethan- oder Polyetherrest.

Der heteroatomhaltige Rest X bedeutet vorzugsweise einen heteroatomhaltigen zweibindigen Rest, wie beispielsweise -O-, -S-, -N(R)-, -C(O)-O-, -O-C(O)-O-, -O-C(O)-O-N(R)-, -N(R)-C(O)-O-, -S(O)-, -S(O)₂-, -S(O)-O-, -S(O)₂-O-, -O-S(O)₂-O-, C(O)-N(R)-, -S(O)₂-N(R)-, -S(O)₂-N[C(O)R]-, -O-S(O)₂-N(R)-, -N(R)-S(O)₂-O-, - P(O)(OR)-O-, -O-P(O)(OR)-, -O-P(O)(OR)-O-, -P(O)(OR)-N(R)-, -N(R)-P(O)(OR)-, - O-P(O)(OR)-N(R)-, -N(R)-P(O)(OR)-O-, -N[C(O)R]-, -N=C(R)-O-, -C(R)=N-O-, - C(O)-N[C(O)R]-, -N[S(O)₂R']-, -C(O)-N[S(O)₂R']- oder -N[P(O)R"₂]-, wobei R für Wasserstoff oder gegebenenfalls substituierte C₁-C₂₀-Alkyl- oder C₆-C₂₀-Arylreste steht, R' für einen gegebenenfalls substituierten C₁-C₂₀-Alkyl- oder C₆-C₂₀-Arylrest steht, und R" für einen gegebenenfalls substituierten C₁-C₂₀-Alkyl, C₆-C₂₀-Aryl-, C₁-C₂₀-Alkoxy- oder C₆-C₂₀-Aryloxyrest steht.

Besonders bevorzugt steht X in der allgemeinen Formel (I) für ein Sauerstoff- oder Stickstoffatom oder eine Carboxy-, Carbamat-, Carbonat-, Ureido-, Urethan- oder Sulfonatbindung.

R² bedeutet vorzugsweise Wasserstoff. R³ ist vorzugweise C₁-C₆-Alkyl, insbesondere Methyl oder Ethyl, oder Phenyl.

Der Rest R⁴ in der allgemeinen Formel (I) bedeutet vorzugsweise eine Methyl- oder Ethylgruppe. Bevorzugt ist n = 0 oder 1. Weiterhin können zwei Reste R⁴ zu einem Zyklus verbrückt sein.

Gemäß einer weiteren bevorzugten Ausführungsform ist der Rest R² Wasserstoff, R³ und R⁴ bedeuten Methylgruppen und n = 1.

Bevorzugt weisen die mindestens difunktionellen α-Alkoxysilanverbindungen ein mittleres Molekulargewicht von 2.000 bis 50.000 g/mol, ganz besonders bevorzugt etwa 10.000 bis 20.000 g/mol auf.

Die Herstellung von α-alkoxysilanterminierten Verbindungen ist u.a. in WO 03/014226 ausführlich beschrieben. Daneben sind viele der bevorzugten α-Silane auf Basis von Polyethern oder Polyurethanen kommerziell von der Firma Wacker Chemie AG verfügbar. Diese werden unter der Markenbezeichnung GENIOSIL STP-E kommerziell vertrieben. Beispielhaft seien die Typen STP-E10, STP-E30 angeführt.

In einer weiteren Ausführungsform kann die Komponente (A), zusätzlich zur mindestens zwei α-Alkoxysilangruppen aufweisenden Silanverbindung der Formel (I), auch mindestens difunktionelle Alkoxysilanverbindungen der allgemeinen Formel (II) umfassen: 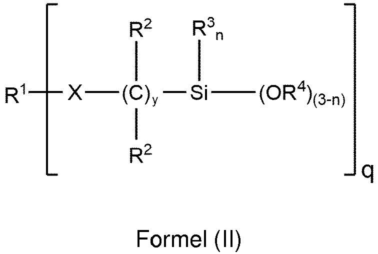
worin R¹, R², R³ und R⁴ die oben für Formel (I) angegebenen Bedeutungen besitzen;
X ein heteroatomhaltiger zwei- oder dreibindiger Rest ist, der durch ein Heteroatom, insbesondere Sauerstoff, Stickstoff oder Schwefel, an die Gruppe -(CR²₂)_{y}-SiR³ₙ(OR⁴)(₃₋ₙ) gebunden ist,
n = 0-2 ist,
q mindestens 2, bevorzugt 2 bis 9, weiter bevorzugt 2 bis 4 ist; und
y eine ganze Zahl von 2 bis 6 bedeutet.

In den bevorzugten Verbindungen der allgemeinen Formel (II) ist y = 3. Bei diesen Verbindungen handelt es sich um sogenannte γ-Alkoxysilane, bei denen das Heteroatom des Restes X durch eine wahlweise substituierte Propyleneinheit von dem Siliziumatom der Alkoxysilangruppe getrennt ist.

γ-Alkoxysilane weisen im Vergleich zu den α-Alkoxysilanen eine niedrigere Reaktivität auf. Durch Zugabe von γ-Alkoxysilanen ist es damit möglich, die Reaktivität der erfindungsgemäßen Massen in Bezug auf die Feuchtigkeitshärtung bei Bedarf zu senken und damit die Zeit bis zur Bildung einer Haut, nach vorangegangener Aktivierung des latenten Säurebildners, zu erhöhen.

Die Herstellung von γ-Alkoxysilanen wird bspw. in US 5 364 955 und den darin genannten Schriften ausführlich beschrieben. Kommerziell sind γ-Alkoxysilane der allgemeinen Formel (II) mit mindestens zwei alkoxysilanhaltigen Endgruppen von der Firma Wacker Chemie AG erhältlich. Derartige γ-silanterminierte Polyether sind unter den Bezeichnungen Geniosil STP-E15 und STP-E35 verfügbar.

Die Komponente (A) kann aus einer oder mehreren Verbindungen der allgemeinen Formeln (I) und/oder (II) zusammengesetzt sein.

In den durch Feuchtigkeit härtbaren Massen der vorliegenden Erfindung liegt die Komponente (A), bezogen auf die Masse der gesamten Formulierung, typischerweise in einem Bereich von 10 bis 99 Gew.-% vor, bevorzugt von 15 bis 80 Gew.-% und besonders bevorzugt von 20 bis 70 Gew.-%.

Bezogen auf die Gesamtmenge der Komponente (A) beträgt der Anteil an α-Alkoxysilanverbindungen der Formel (I) in Komponente (A) bevorzugt mindestens 10 Gewichtsprozent, weiter bevorzugt mindestens 20 Gewichtsprozent, besonders bevorzugt mindestens 30 Gewichtsprozent.

Besonders bevorzugt besteht die Komponente (A) aus der mindestens difunktionellen α-Alkoxysilanverbindung in einem Anteil von 50 bis 100 Gewichtsprozent, bevorzugt 40 bis 100 Gewichtsprozent, und der mindestens difunktionellen γ-Alkoxysilanverbindung in einem Anteil von 0 bis 50 Gewichtsprozent, bevorzugt 0 bis 40 Gewichtsprozent, jeweils bezogen auf das Gesamtgewicht der Komponente (A).

### Komponente (B): Monofunktionelle Silanverbindung

Neben der Komponente (A) enthalten die erfindungsgemäßen Massen darüber hinaus als Komponente (B) mindestens eine monofunktionelle Silanverbindung, die nur eine Alkoxysilangruppe aufweist, und/oder Derivate davon. Insbesondere kann die Komponente (B) teilkondensierte oder verbrückte, insbesondere zyklisch verbrückte, Derivate der monofunktionellen Silanverbindung umfassen, die durch teilweise Hydrolyse der Alkoxysilangruppen oder durch Umsetzung der Alkoxysilangruppen mit zweiwertigen Alkoholen erhältlich sind.

Die Komponente (B) umfasst bevorzugt Verbindungen der allgemeinen Formel (III) : 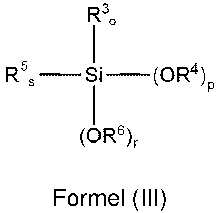
worin R³ und R⁴ die oben im Zusammenhang mit Formel (I) angegebenen Bedeutungen besitzen;
R⁵ unabhängig ein monovalenter organischer Rest ist, der aus der Gruppe der linearen, verzweigten, zyklischen, gesättigten, ungesättigten und aromatischen Kohlenwasserstoffen ausgewählt ist, und wahlweise durch Heteroatome substituiert und oder durch Heteroatome unterbrochen sein kann und von R³ verschieden ist;
R⁶ ein Si-Rest ist, an den weitere Reste gemäß Formel (III) verknüpft sein können,
o eine ganze Zahl von 0 bis 3 ist,
p eine ganze Zahl von 1 bis 3 ist,
s eine ganze Zahl von 0 bis 3 und
r eine ganze Zahl von 0 bis 2 ist,
wobei die Summe aus o + p + r + s = 4 ist.

Bevorzugt ist o gleich 0 oder 1, p ist 2 oder 3, s ist 1 und r ist 0 oder 1.

Mit umfasst sind auch teilkondensierte oder verbrückte Silanverbindungen der Formel (III).

Die monofunktionelle Silanverbindung der Komponente (B) stabilisiert die erfindungsgemäßen Massen gegenüber eindringender Feuchtigkeit und trägt bei der Aushärtung der Massen zusätzlich zum Haftungsaufbau bei.

Neben klassischen Alkoxyvinylsilanen können als Komponente (B) verschiedene monofunktionelle, vorzugsweise monomere, α- oder γ-Alkoxysilane zum Einsatz kommen.

Bevorzugte Beispiele aus der Gruppe der α-Silane umfassen (Methacryloxymethyl)methyldimethoxysilan, Methacryloxymethyltrimethoxysilan, N-Trimethoxysilylmethyl- O-methylcarbamat und N-Dimethoxy(methyl)silyl-methyl-O-methylcarbamat.

Als Beispiele für kommerziell verfügbare monofunktionelle α-Alkoxysilane seien Produkte der Firma Wacker Chemie AG genannt. Entsprechende methacrylat- oder carbamatfunktionalisierte α-Alkoxysilane sind unter den Bezeichnungen GENIOSIL XL 32, XL 33, XL 63 oder XL 65 erhältlich.

Teilkondensierte monofunktionelle Silane sind ebenfalls als Feuchtigkeitsfänger einsetzbar. Dazu werden monofunktionelle Silane wie z.B. Geniosil XL10 (VTMO) mit einer definierten Menge Wasser umgesetzt. Solche Produkte sind beispielsweise unter der Bezeichnung Dynasilan 6490 von der Firma Evonik Industries AG kommerziell erhältlich.

Alkoxysilane, welche mit difunktionellen Alkoholen wahlweise zyklisch überbrückt sind, können ebenfalls als Komponente (B) eingesetzt werden. Solche Produkte sind unter der Bezeichnung Silquest Y-15866 von der Firma Momentive kommerziell erhältlich.

Bevorzugt ist darüber hinaus die Verwendung von Silanen als Komponente (B), die eine Mehrfachfunktion als Feuchtigkeitsfänger und Haftvermittler erfüllen können.

Eine Kombination mehrerer verschiedener Silane gemäß der allgemeinen Formel (III) und ihrer teilkondensierten oder verbrückten Derivate ist ebenfalls im Sinne der Erfindung.

Explizit ausgeschlossen ist jedoch die Verwendung von Silanen, die in Gegenwart von Feuchtigkeit als Vernetzungskatalysatoren wirken und damit die Aushärtung der Masse katalysieren. Zu dieser Gruppe gehören bspw. die in der EP 1 421 129 A beschriebenen Aminosilane. Exemplarisch seien y-Aminopropyltrimethoxysilan oder N-Aminoethyl-3-aminopropyltrimethoxysilan angeführt. Diese katalysieren die vorzeitige Vernetzung und wirken sich damit negativ auf die Offenzeiten und Lagerstabilitäten aus.

In den durch Feuchtigkeit härtbaren Massen der vorliegenden Erfindung liegt die monofunktionelle Silanverbindung (B), die nur eine einzige Alkoxysilangruppe aufweist, typischerweise in einem Bereich von 0,1 bis 30 Gew.-% vor, bevorzugt von 1 bis 20 Gew.-% und besonders bevorzugt von 1,5 bis 15 Gew.-%, jeweils bezogen auf die Masse der gesamten Formulierung.

### Komponente (C): Säurebildner

Neben den Komponenten (A) und (B) enthalten die erfindungsgemäßen Massen darüber hinaus mindestens einen Säurebildner (C). Der Säurebildner umfasst dabei bevorzugt Verbindungen, die in der Lage sind, durch Einwirkung von aktinischer Strahlung oder durch thermische Aktivierung eine starke Säure freizusetzen. Die freigesetzte Säure katalysiert die Hydrolyse und Vernetzung der in der Masse enthaltenen, durch Feuchtigkeit härtenden Gruppierungen. Durch Bestrahlen mit aktinischer Strahlung aktivierbare Säurebildner werden im Folgenden auch als photolatente Säure bezeichnet. Thermische aktivierbare Säurebildner werden auch als wärmelatente Säure bezeichnet.

Neben dem Säurebildner (C) enthalten die Massen keine weiteren Katalysatoren für die Feuchtigkeitshärtung. Insbesondere ist die Verwendung von im Stand der Technik üblichen Katalysatoren auf Basis von Zinnverbindungen oder Aminosilanen explizit ausgeschlossen.

Geeignete photolatente Säuren sind unter anderem aus kationisch polymerisierbaren Systemen bekannt. So können aromatische Arylsulfoniumsalze, wie in WO 2003/072567 oder WO 2003/008404 beschreiben oder Aryliodoniumsalze, wie in WO 1998/002493 oder US 6 306 555 beschrieben, zum Einsatz kommen.

Als photolatente Säuren geeignete Oniumsalze werden darüber hinaus von J.V. Crivello und K. Dietliker in "Photoinitiators for Free Radical, Cationic & Anionic Photopolymerisation", Band III von "Chemistry & Technology of UV & EB Formulation for Coatings, Inks & Paints", 2. Ed., J. Wiley and Sons/SITA Technology (London), 1998 beschrieben.

Als unterschiedliche Anionen der Sulfonium- oder lodoniumsalze seien beispielhaft HSO₄⁻, PF6⁻, SbF6⁻, AsF6⁻, Cl⁻, Br⁻, I⁻, ClO₄⁻, PO4⁻, SO₃CF3⁻, Tosylat, Aluminate oder ein Borat-Anion, wie etwa BF₄⁻ und B(C₆F5)₄⁻ angeführt.

Kommerziell als photolatente Säuren verfügbare Photoinitiatoren auf Triarylsulfoniumbasis sind unter den Markennamen Chivacure 1176 von der Firma Chitech, Irgacure PAG 290 von der Firma BASF oder UVI-6976 und UVI-6974 von der Firma Dow Chemical Co. erhältlich.

Kommerziell als photolatente Säuren verfügbare Photoinitiatoren auf Diaryliodoniumbasis sind u.a. unter den Markennamen UV1242 oder UV2257 von der Firma Deuteron und Rhodorsil 2074 von der Firma Rhodia erhältlich.

Neben photolatenten Säuren auf Basis von lodonium- und Sulfoniumionen sind auch nicht-ionische photolatente Säuren in den erfindungsgemäßen Massen verwendbar. Derartige Verbindungen auf Basis von Oximestern und Oximsulfonsäureestern werden in WO 2013/083505 und EP 1 124 832 beschrieben. Kommerziell verfügbare nicht-ionische photolatente Säuren auf Basis von Oximsulfonsäureestern sind unter anderem unter den Bezeichnungen Irgacure PAG 103, Irgacure PAG 121 und Irgacure PAG 203, CGI 1907 von der Firma BASF verfügbar.

Ferner können als Komponente (C) auch Triazinverbindungen oder Benzoinester als nicht-ionische photolatente Säuren genutzt werden.

Die in den erfindungsgemäßen Massen als Säurebildner eingesetzte photolatente Säure ist vorzugsweise durch aktinische Strahlung einer Wellenlänge von 200 bis 480 nm aktivierbar, besonders bevorzugt bei einer Wellenlänge von 320 bis 480 nm. Bei Bedarf kann die photolatente Säure mit einem geeigneten Sensibilisierungsmittel kombiniert werden.

Besonders bevorzugt ist in der vorliegenden Erfindung die Verwendung der beschriebenen nicht-ionischen photolatenten Säure als Komponente (C).

Geeignete wärmelatente Säuren auf Basis von quartären Benzylammoniumsalzen werden in EP 0 343 690 oder WO 2005/097883 beschrieben. Kommerziell verfügbare Produkte sind unter den Bezeichnungen K-PURE CXC-1614 oder K-PURE CXC-1733 von King Industries Inc. erhältlich.

Daneben können auch aromatische Sulfoniumsalze als thermisch aktivierbare Säurebildner eingesetzt werden. Entsprechende Produkte sind unter den Bezeichnungen SAN-AID SI-80L und SAN-AID SI-100L von der Firma SAN-SHIN Chemical Industry Co. Ltd, erhältlich. Darüber hinaus können verschiedene Metallchelatkomplexe auf Basis von Titan oder Aluminium als wärmelatente Säuren zum Einsatz kommen.

Die voranstehenden Aufzählungen sind als beispielhaft für den Säurebildner (C) zu sehen und keineswegs als limitierend zu verstehen.

Es hat sich gezeigt, dass im Vergleich zum Stand der Technik sehr geringe Konzentrationen der Komponente (C) ausreichen, um eine schnelle Hautbildung und daran anschließend eine vollständige Aushärtung zu erzielen. Dies stellt in Anbetracht der hohen Kosten der entsprechenden Säurebildner einen weiteren Vorteil dar. Darüber hinaus sind neben der geringen Menge des Säurebildners (C) keine weiteren sauren, basischen oder metallhaltigen Härtungskatalysatoren enthalten. Dies ermöglicht neben einer verbesserten Lagerstabilität der Massen auch längere Verarbeitungszeiten in Gegenwart von Feuchtigkeit.

In den durch Feuchtigkeit härtbaren Massen der vorliegenden Erfindung ist der Säurebildner (C) bezogen auf die Masse der gesamten Formulierung typischerweise in einem Anteil von 0,0001 bis 5 Gew.-% enthalten, bevorzugt jedoch in Anteilen von höchstens 3 Gew.-%, weiter bevorzugt höchstens 1 Gew.-% oder höchstens 0,5 Gew.-% und besonders bevorzugt höchstens 0,3 Gew.-%.

Der Einsatz besonders niedriger Konzentrationen des Säurebildners (C) ist vor allem dann bevorzugt möglich, wenn nicht-ionische Photoinitiatoren verwendet werden und gleichzeitig der Massenanteil an Verbindungen der allgemeinen Formel (I) im Verhältnis zu Verbindungen der allgemeinen Formel (II) in Komponente (A) größer, bevorzugt größer als 50:50, ist.

Es ist weiterhin möglich, mehr als einen Säurebildner in den erfindungsgemäßen Massen zu verwenden. Besonders bevorzugt ist die Kombination einer photolatenten Säure und einer wärmelatenten Säure, um die Massen neben der Aktivierung durch aktinische Strahlung zusätzlich mit einer Möglichkeit zur thermischen Aktivierung auszustatten. In diesem Falle beträgt der Gesamtanteil der Säurebildner bezogen auf die Masse der gesamten Formulierung bevorzugt höchstens 2 Gew.-%, weiter bevorzugt höchstens 1 Gew.-% und besonders bevorzugt höchstens 0,4 Gew.-%.

### Komponente (D): Additive

Die beschriebenen Massen können darüber hinaus noch fakultative Bestandteile als Additive (D) enthalten. Die Additive (D) sind vorzugsweise aus der Gruppe der Füllstoffe, Farbstoffe, Pigmente, Alterungsschutzmittel, Fluoreszenzmittel, Stabilisatoren, Beschleuniger, Sensibilisatoren, Haftvermittler, Trockenmittel, Vernetzer, Fließverbesserer, Benetzungsmittel, Thixotropierungsmittel, Verdünnungsmittel, Flexibilisierer, polymeren Verdickungsmittel, Flammschutzmittel, Korrosionsinhibitoren, Weichmacher und Tackyfier ausgewählt.

Die vorangegangene Aufzählung an Additiven ist als beispielhaft und keineswegs limitierend zu erachten.

### Formulierung der erfindunasaemäßen Massen

Eine besonders bevorzugte erfindungsgemäße Masse besteht aus den folgenden Komponenten:
(A) 10 bis 99 Masseanteilen der mindestens difunktionellen Alkoxysilanverbindung;
(B) 0,1 bis 30 Masseanteilen der monofunktionellen Alkoxysilanverbindung und/oder eines Derivats davon;
(C) 0,0001-5 Masseanteilen des mindestens einen latenten Säurebildners, bevorzugt von 0,001 bis 2 Gewichtsprozent, höchstens 1 Gewichtsprozent, höchstens 0,5 Gewichtsprozent oder höchstens 0,3 Gewichtsprozent; und
(D) 0-70 Masseanteilen wenigstens eines üblichen Additivs, vorzugsweise ausgewählt aus der Gruppe der Füllstoffe, Farbstoffe, Pigmente, Photosensibilisatoren, Alterungsschutzmittel Fluoreszenzmittel, Stabilisatoren, Feuchtigkeitsfänger, Beschleuniger, Haftvermittler, Vernetzer, Fließverbesserer, Benetzungsmittel, Thixotropierungsmittel, Verdünnungsmittel, Flexibilisierer, polymeren Verdickungsmittel, Flammschutzmittel, Korrosionsinhibitoren, Weichmacher und Tackyfier, allein oder in Kombination miteinander,
wobei die Masseanteile der Komponenten (A) bis (D) 100 ergeben.

Die mindestens difunktionelle Alkoxysilanverbindung besteht bevorzugt aus einer oder mehreren mindestens difunktionellen α-Alkoxysilanverbindungen, wahlweise im Gemisch mit einer oder mehreren mindestens difunktionellen γ-Alkoxysilanverbindungen.

Die Masse weist bevorzugt eine Hautbildungszeit von weniger als 5 min auf, nach Aktivierung des Säurebildners und Zutritt von Luftfeuchtigkeit.

Erfindungsgemäß sind in der Masse keine Verbindungen enthalten, welche die Vernetzung von Alkoxysilanen unter Einwirkung von Feuchtigkeit beschleunigen können.

Die Herstellung der erfindungsgemäßen Massen ist dadurch gekennzeichnet, dass keine zusätzlichen aufwendigen apparativen oder sonstigen technischen Maßnahmen notwendig sind, um Feuchtigkeit auszuschließen. Auf den Einsatz getrockneter Luft oder Schutzgas kann im Rahmen der Herstellung oder der Verarbeitung der Massen verzichtet werden. Die Anwesenheit der monofunktionellen Silanverbindung gemäß Komponente (B) stellt darüber hinaus die Langzeitstabilität der Massen gegenüber eindringender Feuchtigkeit sicher.

### Anwendung der erfindunasaemäßen Massen

Die mindestens die Komponenten (A), (B) und (C) enthaltenden erfindungsgemäßen Massen zeichnen sich ferner dadurch aus, dass sie auch in Schattenzonen nach vorangegangener Aktivierung, beispielsweise durch Belichten mit aktinischer Strahlung, sicher aushärten. Die einstellbaren Offenzeiten der Massen erlauben dabei Prozesse, bei denen die härtbare Masse zunächst auf ein Substrat aufgebracht und anschließend aktiviert wird, wonach das Fügen mit einem zweiten Substrat innerhalb des Offenzeitfensters erfolgt. Damit ist es möglich, auch nicht durchstrahlbare, intransparente Bauteile mit hoher Prozesssicherheit durch eine Voraktivierung der Massen zu verkleben.

Ein bevorzugtes Verfahren, bei dem die erfindungsgemäße Masse erst auf einem Substrat aktiviert wird, umfasst die folgenden Schritte:
a) Dosieren der Masse auf ein erstes Substrat;
b) Aktivieren der Masse durch Belichten mit aktinischer Strahlung einer geeigneten Wellenlänge während eines ausreichend langen Zeitraums, so dass aus dem Säurebildner eine freie Säure freigesetzt wird;
c) Zuführen eines zweiten Substrates auf die bestrahlte Masse innerhalb einer Offenzeit unter Bildung einer Klebschicht;
d) Einhalten einer Wartezeit bis zum Erreichen einer Handfestigkeit der Klebschicht; und
e) Einwirken lassen von Feuchtigkeit auf die Masse bis zum Erreichen einer Endfestigkeit der Klebschicht.

Durch die hohe Stabilität gegenüber Feuchtigkeit ist die Dauer des Zeitfensters zwischen Dosieren und Aktivieren der Masse über einen Zeitraum von mindestens 24 Stunden, bevorzugt von mindestens 3 Tagen und besonders bevorzugt von mindestens 7 Tagen, ohne Einbußen in Bezug auf die Härungscharakteristik und die Eigenschaften der ausgehärteten Masse frei wählbar. Neben der Anpassung der Formulierung erlauben unterschiedliche Bestrahlungszeiten oder Bestrahlungsdosen das Offenzeitfenster zwischen Schritt a) und c) weiter zu variieren. Für automatisierte Fügeverfahren sind Offenzeiten von mindestens 10 Sekunden bevorzugt.

Durch den schnellen Aufbau einer Handfestigkeit können ferner kurze Taktzeiten in industriellen Fertigungsprozessen für Bauteile erzielt werden, die nach dem beschriebenen Verfahren gefügt werden. Die Wartezeit nach Schritt c) bis zum Aufbau einer Handfestfestigkeit liegt dabei bevorzugt in einem Bereich von 1 Sekunde bis 2 Minuten.

Noch schnellere Handfestigkeiten können durch Befeuchten des zweiten Substrates vor dem Zuführen zum ersten Substrat erreicht werden.

Zur schnellen Vernetzung dickerer Schichten kann es auch vorteilhaft sein, geringe Mengen Wasser kurz vor der Aktivierung der erfindungsgemäßen Masse zuzumischen.

Gemäß einer weiteren Ausführungsform wird ein Verfahren zum Fügen oder Vergießen von Bauteilen unter Verwendung einer erfindungsgemäßen Masse bereitgestellt, bei dem die Masse unter Ausschluss von Feuchtigkeit durch Belichten mit aktinischer Strahlung und/oder Erwärmen auf eine Temperatur oberhalb einer Zersetzungstemperatur des Säurebildners aktiviert wird.

Bei diesem Verfahren kann der Zeitpunkt des Dosierens und Aushärtens nach einer Aktivierung der Massen in einem Vorratsgefäß, in Abwesenheit von Feuchtigkeit, bei Raumtemperatur über einen Zeitraum von mindestens 24 Stunden, bevorzugt von mindestens 3 Tagen und besonders bevorzugt von mindestens 7 Tagen, frei gewählt werden. Die Aktivierung kann dabei sowohl thermisch als auch durch aktinische Strahlung erfolgen.

Ein Verfahren zum Verkleben zweier Fügepartner, welches durch eine Aktivierung der Masse in einem Vorratsgefäß durch aktinische Strahlung gekennzeichnet ist, umfasst folgende Schritte:
a) Aktivieren der Masse unter Ausschluss von Feuchtigkeit durch Bestrahlen in einem durchstrahlbaren Vorratsgefäßes mit aktinischer Strahlung einer geeigneten Wellenlänge während eines ausreichend langen Zeitraums, so dass aus dem photolatenten Säurebildner eine freie Säure freigesetzt wird;
b) Dosieren der aktivierten Masse auf ein erstes Substrat;
c) Zuführen eines zweiten Substrates innerhalb einer Offenzeit unter Bildung einer Klebschicht;
d) Einhalten einer Wartezeit bis zum Erreichen einer Handfestigkeit der Klebschicht; und
e) Einwirken lassen von Feuchtigkeit auf die Masse bis zum Erreichen einer Endfestigkeit der Klebschicht.

Das Zeitfenster zwischen Schritt a) und b) kann unter Ausschluss von Feuchtigkeit in einem Bereich von mindestens 24 Stunden, bevorzugt mindestens 3 Tagen und besonders bevorzugt mindestens 7 Tagen, ohne Einbußen in Bezug auf die Härtungscharakteristik und die Eigenschaften der ausgehärteten Masse frei gewählt werden. Nach Aktivierung der Masse erfolgt keine Aushärtung, so lange diese nicht in Kontakt mit Feuchtigkeit kommt. In einem von Umgebungsfeuchtigkeit geschützten Vorratsgefäß kann die so aktivierte Masse über einen Zeitraum von Wochen im flüssigen Zustand bleiben, ohne dabei die Fähigkeit zur anschließenden vollständigen Aushärtung in Kontakt mit Feuchtigkeit zu verlieren. Die Hautbildungszeiten der aktivierten Massen bei Einwirkung von Feuchtigkeit bleiben auch über einen Zeitraum von mehreren Tagen nahezu konstant. Die erfindungsgemäßen Massen zeigen nach Aktivierung selbst bei langer Verweilzeit im Vorratsgefäß und anschließendem Dosieren und Aushärten keine verschlechterten mechanischen Eigenschaften im Vergleich zu solchen Massen, die direkt nach der Aktivierung verarbeitet wurden.

Bevorzugt ist das durchstrahlbare Vorratsgefäß eine durchstrahlbare Kartusche.

Die Wartezeit nach Schritt c) bis zum Aufbau einer Handfestfestigkeit liegt bevorzugt in einem Bereich von 1 Sekunde bis 2 Minuten.

Zur Aktivierung in einem Vorratsgefäß werden bevorzugt Massen eingesetzt, die keine epoxidhaltigen Verbindungen in der Formulierung enthalten. Überraschenderweise hat sich gezeigt, dass bereits geringe Mengen von epoxidhaltigen Silanhaftvermittlern oder Alkylglycidylethern dazu führen, dass die Hautbildungszeiten der aktivierten Masse nicht mehr unverändert schnell bleiben, sondern schon nach mehreren Minuten stark ansteigen. Solche Massen können auch nicht mehr vollständig ausgehärtet werden.

Gemäß einer weiteren bevorzugten Ausführungsform des oben beschriebenen Verfahrens können die Schritte a) und b) sehr kurz nacheinander erfolgen, so dass die Verweilzeiten der Masse im Vorratsgefäß gerade dazu ausreichen, um die Säure aus der photolatenten Säure vollständig in ihre freie Form zu überführen. Dadurch können die Aktivierung der Masse durch Bestrahlung und die Dosierung der Masse im Wesentlichen zeitgleich erfolgen. Mit Hilfe einer geeigneten Dosiervorrichtung kann die Masse so "im Durchfluss" kontinuierlich aktiviert werden. Eine mögliche Unterbrechung des Dosiervorgangs führt bei den erfindungsgemäßen Massen dann nicht zu einem Zusetzen und Verstopfen des Dosierventils.

Geeignete Dosiervorrichtungen zur Durchflussaktivierung der Massen durch Bestrahlung sind in DE 3 702 999 und DE 10 2007 017 842 beschrieben. Das in der in EP 0 508 046 beschriebene allmähliche Verstopfen der Reaktionsrohre durch ein Aushärten des aktivierten Klebstoffes kann mit den erfindungsgemäßen Massen nicht auftreten, da keine Vernetzung der Alkoxysilangruppen erfolgt, solange die Massen nicht in Kontakt mit Feuchtigkeit gebracht werden. Dementsprechend kann bei Verwendung der erfindungsgemäßen Massen auf Basis silanhaltiger Polymere auf den zusätzlichen konstruktiven Aufwand für die Erzeugung turbulenter Strömungen zur besseren Vermischung der aktivierten Massen im Dosierkanal verzichtet werden.

Ein weiterer Vorteil der Aktivierung der erfindungsgemäßen Massen durch Bestrahlung und anschließender Feuchtehärtung liegt darin, dass ein hoher Wärmeeintrag in die zu verarbeitenden Bauteile vermieden werden kann. Dies ist vor allem bei großflächigen Vergussanwendungen im Elektronikbereich von Vorteil.

Gemäß einer weiteren Ausführungsform können die erfindungsgemäßen Massen thermisch aktiviert werden. Ein Verfahren zum Verkleben zweier Fügepartner, bei dem die Masse in einem Vorratsgefäß durch Erwärmen aktiviert wird, umfasst bevorzugt die folgenden Schritte:
a) Bereitstellen der Masse in einem beheizbaren Vorratsgefäß unter Ausschluss von Feuchtigkeit und Aktivieren der Masse durch Erwärmen auf eine vorbestimmte Temperatur und während eines ausreichend langen Zeitraums, so dass die wärmelatente Säure in ihre freie Form überführt wird;
b) Dosieren der aktivierten Masse auf ein erstes Substrat;
c) Zuführen eines zweiten Substrates innerhalb einer Offenzeit unter Bildung einer Klebschicht;
d) Einhalten einer Wartezeit bis zum Erreichen einer Handfestigkeit der Klebschicht;
e) Einwirken lassen von Feuchtigkeit auf die Masse bis zum Erreichen der Endfestigkeit der Klebschicht.

Das Zeitfenster zwischen Schritt a) und b) kann dabei in einem Bereich von mindestens 24 Stunden, bevorzugt von mindestens 3 Tagen und besonders bevorzugt von mindestens 7 Tagen, frei gewählt werden. Nach Aktivierung der Masse erfolgt keine Aushärtung, so lange diese nicht in Kontakt mit Feuchtigkeit kommt. In einem von Umgebungsfeuchtigkeit geschützten Vorratsgefäß kann die thermisch aktivierte Masse über einen Zeitraum von Wochen im flüssigen Zustand bleiben, ohne dabei die Fähigkeit zur anschließenden vollständigen Aushärtung in Kontakt mit Feuchtigkeit zu verlieren. Die erfindungsgemäßen Massen zeigen nach Aktivierung selbst bei langer Verweilzeit im Vorratsgefäß und anschließendem Dosieren und Aushärten keine signifikant längeren Hautbildungszeiten oder verschlechterte mechanische Eigenschaften im Vergleich zu Massen, die unmittelbar nach der thermischen Aktivierung verarbeitet wurden.

Die Wartezeit bis zum Aufbau einer Handfestfestigkeit liegt bevorzugt in einem Bereich von 1 Sekunde bis 2 Minuten.

In einer weiteren bevorzugten Ausführungsform des oben beschriebenen Verfahrens können die Schritte a) und b) sehr kurz nacheinander erfolgen, so dass die Verweilzeiten im Vorratsgefäß gerade ausreichen, um die wärmelatente Säure vollständig in ihre freie Form zu überführen. Dadurch können die thermische Aktivierung und Dosierung der Massen im Wesentlichen zeitgleich erfolgen. In einer geeigneten Dosiervorrichtung mit beheizbarem Dosierkanal lässt sich die Masse so im Durchfluss kontinuierlich aktivieren. Geeignete beheizbare Dosierventile sind von der Firma Axiss Dosiertechnik GmbH verfügbar.

Bei Verwendung der erfindungsgemäßen Massen tritt kein allmähliches Verstopfen der beheizten Reaktionsrohre durch ein Aushärten der aktivierten Massen auf, da keine Vernetzung der Alkoxysilangruppen eintritt, solange diese nicht in Kontakt mit Feuchtigkeit gebracht werden.

Mit dem beschriebenen Verfahren lassen sich die erfindungsgemäßen Massen durch thermische Behandlung mit hoher Prozesssicherheit und geringem apparativen Aufwand für eine Feuchtigkeitshärtung aktivieren. Damit eignen sich die Massen unter Einsatz dieses Verfahrens vor allem für großflächige Vergussanwendungen.

In einer weiteren besonders bevorzugten Ausführungsform enthält die erfindungsgemäße Masse zusätzlich zu einer photolatenten Säure auch eine wärmelatente Säure. Dadurch lässt sich die obere Schicht eines Vergusses aus der erfindungsgemäßen Masse zusätzlich durch Bestrahlung fixieren, um ein Verfließen der Masse auf dem Bauteil zu verhindern. Somit ist es möglich, nachgeschaltete Verarbeitungs- und Fertigungsschritte zeitnah durchzuführen, ohne die vollständige Aushärtung der Masse abwarten zu müssen.

Die Erfindung wird nachfolgend anhand bevorzugter Ausführungsbeispiele unter Bezugnahme auf die vorangegangene Beschreibung weiter beschrieben. Die Beispiele sind dabei nicht in einem einschränkenden Sinne zu verstehen.

### Bestrahlung

Zur Bestrahlung wurden die erfindungsgemäßen Massen mit einer LED-Lampe DELOLUX 20 / 400 der Firma DELO Industrie Klebstoffe bei einer Wellenlänge von 400 nm mit einer Intensität von 100 ± 5 mW/cm² bestrahlt.

### Feuchtigkeit

"Feuchtigkeit" ist, wenn nicht anders angegeben, definiert als 30% relative Luftfeuchtigkeit bei Raumtemperatur oder die Feuchtigkeit auf Substratoberflächen unter diesen Bedingungen.

### Raumtemperatur

Raumtemperatur ist definiert als 23 °C ± 2 °C.

### Aushärtung

"Vernetzung" oder "Aushärtung" werden definiert als Polymerisations- oder Kondensationsreaktion über den Gelpunkt hinaus. Der Gelpunkt ist der Punkt, an dem die Massen nicht mehr fließfähig sind.

### Hautbildungszeit

Als Hautbildungszeit gilt die Zeit nach einer Aktivierung der Masse, ab der bei Berührung der Oberfläche der Masse kein Fadenzug mehr beobachtet werden kann.

### Offenzeit

Als Offenzeit gilt diejenige Zeit zwischen einer Aktivierung der Masse durch Erwärmung oder Bestrahlung bis zum Beginn einer Hautbildung. Innerhalb dieses Zeitfensters kann der Fügeprozess erfolgen. Während der Offenzeit verändert die Masse ihre Eigenschaften im Hinblick auf Viskosität, Adhäsion und Hautbildung an der Oberfläche nur unwesentlich. Erst nach der Offenzeit setzen die Hautbildung ein. Die Offenzeit der erfindungsgemäßen Massen ist insbesondere von Temperatur, Bestrahlungsdosis und Feuchtigkeit abhängig.

### Kartuschen

Als Kartuschen wurden durchstrahlbare 5 ml SEMCO-Kartuschen der Firma PPG Industries eingesetzt.

### Viskosität

Die komplexe Viskosität wurde mit einem Rheometer Physica MCR302 der Firma Anton Paar mit einem standardisierten Messkegel PP20 bei 23 °C mit einem 200 µm Spalt gemessen und bei einer Scherrate von 10/Sekunde bestimmt. Zur Beurteilung der Lagerstabilität wurde die Viskositätsmessung bei Raumtemperatur nach 7 Tagen Lagerung der Massen bei 36 °C unter Licht- und Feuchtigkeitsausschluss wiederholt. Die Massen gelten als lagerstabil, bis die Viskosität unter den genannten Lagerbedingungen um 100% angestiegen ist.

### Kohäsion und Reißdehnung

Aus den Massen wurden Schulterstäbe definierter Größe (Abmessungen 25 x 5,5 x 2 mm, Messstrecke 10 x 2 x 2 mm) gegossen. Die Schulterstäbe wurden von beiden Seiten jeweils 60 s lang bestrahlt (DELOLUX 20/400; Intensität: 200 mW/cm²) und 8 Tage bei Raumtemperatur und 50% rel. Feuchtigkeit gelagert. Die Schulterstäbe wurden anschließend in einer Zugprüfmaschine der Firma Zwick mit einer Geschwindigkeit von 30 mm/min auseinandergezogen und die Kohäsion und Reißdehnung gemäß DIN EN ISO 527 bestimmt.

### Druckscherfestigkeit Glas/Glas

Jeweils zwei Probekörper (Abmessungen 20 mm * 20 mm * 5 mm) aus Glas wurden mit 5 mm Überlappung unter Verwendung der jeweiligen Masse verklebt. Dazu wurde auf den ersten Probekörper eine Raupe aus der Masse aufgetragen und dünn verstrichen. Nach Voraktivieren der Masse mit den angegebenen Parametern wurde der zweite Probekörper gefügt. Die Klebschichtdicke von 0,1 mm und die Überlappung wurden durch eine Verklebevorrichtung eingestellt. Die Aushärtung der Masse erfolgte wie unter dem Punkt "Kohäsion und Reißdehnung" beschrieben. Die Verklebung wurde wiederum auf der Zwick-Prüfmaschine zerstörend mit einer Deformationsgeschwindigkeit von 10 mm/min getestet, und die Kraft beim Versagen der Verklebung aufgezeichnet.

### Handfestigkeit

Handfestigkeit wird definiert, als das Maß an Festigkeit, ab dem gefügte Teile in Folgeprozessen gehandhabt werden können, ohne dass es zu einer Zerstörung des Klebeverbundes kommt. Die Höhe der nötigen Handfestigkeit ist dabei von dem jeweiligen Bauteil und der dazugehörigen Anwendung abhängig. Zur Evaluierung der Handfestigkeit wurden Scherfestigkeiten mit Hilfe des Kraftmessgerätes PCE-FG500 der Firma PCE Instruments UK Ltd. an einem 500N Prüfstand des Typus SLJ-B bestimmt. Als Probekörper wurden jeweils zwei gefügte Glas-Druckscherkörper (Abmessungen 20 mm * 20 mm * 5 mm) mit einer Klebefläche von 100 mm² und einer Klebschichtdicke von 100 µm eingesetzt. Diese wurden 4 s lang mit einer Intensität von 100 mW/cm² mit einer LED-Lampe DELOLUX 20 / 400 der Firma DELO Industrie Klebstoffe bestrahlt. Das Fügen erfolgte innerhalb der Offenzeit. Die Prüfung der Verklebung erfolgte 60 s nach dem Verkleben. Die Festigkeit wurde dabei über den Mittelwert von 5 unabhängigen Messungen bestimmt. Der Festigkeitsaufbau zum Erreichen einer Handfestigkeit innerhalb von 60 s gilt als ausreichend hoch, wenn eine Scherfestigkeit von mindestens 30 N erreicht wird.

### Herstellungsbeispiele

Zur Herstellung der erfindungsgemäßen Massen wurden zunächst die Komponenten (B) und (D) miteinander vermischt und homogenisiert. Anschließend wurde der Säurebildner (C) zugefügt und das Gemisch bei 50 °C für 15 Minuten homogenisiert. Im Falle einer wärmelatenten Säure wurde dieser ohne zusätzlichen Wärmeeintrag eingearbeitet und über 12 h bei Raumtemperatur homogenisiert. Abschließend wurde jeweils die Silankomponente (A) zugefügt und mit einem Dissolver eingearbeitet.

Vergleichsbeispiele wurden in analoger Weise hergestellt.

Die Zusammensetzung der erfindungsgemäßen Massen und der Vergleichsbeispiele ist in den nachfolgenden Tabellen angegeben. Die Prozentangaben bedeuten jeweils Gewichtsprozent bezogen auf das Gesamtgewicht der Masse.

Die in den folgenden Tabellen verwendeten Abkürzungen bedeuten jeweils:
Silan 1: Geniosil STP-E 10; Fa. Wacker Chemie AG
Silan 2: Geniosil XL 33; Fa. Wacker Chemie AG
Silan 3: Dynasilan VTMO; Fa. Evonik Industries AG
Silan 4: Geniosil STP-E 35; Fa. Wacker Chemie AG
Photoinitiator 1: Irgacure PAG 121; Fa. BASF SE
Photoinitiator 2: 2-(4-Methoxystyryl)-4,6-bis-(trichloromethyl)-1,3,5-triazine, Fa. Sigma-Aldrich
Wärmelatente Säure 1: K-PURE CXC-1614, Fa. King Industries Inc.
Weichmacher: OXSOFT TOTM, Fa. Oxea
Stabilisator: Irganox 1135; Fa. BASF SE

**Tabelle 1: Variation des Säurebildners**

| | Beispiele | | | | |
|---|---|---|---|---|---|
| | 1 | 2 | 3 | 4 | 5 |
| **Komponente (A)** | | | | | |
| Silan 1 | 65 | 65 | 65 | 65 | 65 |

| **Komponente (B)** | | | | | |
|---|---|---|---|---|---|
| Silan 2 | 5 | 5 | 5 | 5 | 5 |
| Silan 3 | 1,5 | 1,5 | 1,5 | 1,5 | 1,5 |

| **Komponente (C)** | | | | | |
|---|---|---|---|---|---|
| Photoinitiator 1 | 0,5 | 0,1 | 0,05 | - | - |
| Photoinitiator 2 | - | - | - | 0,1 | - |
| Wärmelatente Säure 1 (in 0,9 Teilen Propylencarbonat) | - | - | - | - | 1 |

| **Komponenten (D)** | | | | | |
|---|---|---|---|---|---|
| Weichmacher | 27,6 | 28,0 | 28,05 | 28,0 | 27,1 |
| Stabilisator | 0,4 | 0,4 | 0,4 | 0,4 | 0,4 |

| **Hautbildungszeiten in Gegenwart von Feuchtigkeit** | | | | | |
|---|---|---|---|---|---|
| ohne Aktivierung | > 7 d | > 7 d | > 7 d | >7d | >7d |
| nach Bestrahlung (4s @ 100 mW/cm²) | <2s | 6s | 23 s | < 2 s | - |
| nach Erwärmen im Vorratsbehältnis für 12 h (80 °C) | - | - | - | - | 40 s |

| **Lagerstabilität nach 3 Monaten innerhalb Vorratsbehältnis** | | | | | |
|---|---|---|---|---|---|
| Viskositätsänderung | i.O.* | i.O.* | i.O.* | i.O.* | i.O.* |

| | | | | | |
|---|---|---|---|---|---|
| * i.O. = Viskositätsanstieg betrug < 100%; Lagerstabilitätskriterium erfüllt. | | | | | |

Die in Tabelle 1 beschriebenen Massen zeichnen sich dadurch aus, dass bereits sehr geringe Mengen an photolatenter Säure für eine schnelle Hautbildung und eine vollständige Aushärtung ausreichend sind. Bereits 0,05 Gew.-% eines nicht-ionischen Säurebildners (C) führen nach Bestrahlung in Gegenwart von Luftfeuchtigkeit zu einer Hautbildung innerhalb weniger Sekunden. Die Hautbildungszeiten können durch die Konzentration der Komponente (C) oder die Bestrahlungsdosis eingestellt werden. Ferner bleiben die Massen nach dem Dosieren auch in Gegenwart von Feuchtigkeit für mindestens 7 Tage flüssig und härten nicht aus, solange keine Aktivierung der Komponente (C) durch Bestrahlung oder Erwärmung erfolgt. Beispiel 5 zeigt, dass es neben der Aktivierung durch Bestrahlung mit Hilfe eines wärmelatenten Säurebildners (C) auch möglich ist, die Massen in einem Vorratsbehältnis, beispielsweise in einer Kartusche, thermisch für die Feuchtigkeitshärtung zu aktivieren.

**Tabelle 2: Stabilität**

| | Beispiel | Vergleichsbeispiele | | |
|---|---|---|---|---|
| | 6 | 7 | 8 | 9 |
| **Komponente (A)** | | | | |
| Silan 1 | 60 | 60 | 60 | - |

| **Komponente (B)** | | | | |
|---|---|---|---|---|
| Silan 2 | 5 | - | 5 | 58,5 |
| Silan 3 | 1,5 | - | 1,5 | 1,5 |

| **Komponente (C)** | | | | |
|---|---|---|---|---|
| Photoinitiator 1 | 0,05 | 0,05 | - | 0,05 |

| **Komponenten (D)** | | | | |
|---|---|---|---|---|
| Weichmacher | 33,05 | 39,55 | 33,1 | 39,55 |
| Stabilisator | 0,4 | 0,4 | 0,4 | 0,4 |

| **Hautbildungszeiten nach Belichtung (4s @ 100 mW/cm²)** | | | | |
|---|---|---|---|---|
| initial (keine Lagerzeit) | 29 s | 21 s | > 7d | > 24 h |
| Nach 7 Tagen Lagerung in Gegenwart von Luftfeuchtigkeit | 27 s | 17s | * | * |
| Nach 10 Tagen Lagerung im Vorratsbehältnis bei 36 °C; Ausschluss von Feuchtigkeit | 27 s | 13 s | * | * |
| | | | | |

| **Viskositäten** | | | | |
|---|---|---|---|---|
| initial (keine Lagerzeit) [mPa*s] | 2240 | 3570 | 2230 | 5 |
| Nach 10 Tagen Lagerung im Vorratsbehältnis bei 36 °C [mPa*s]; Ausschluss von Feuchtigkeit | 2150 | 7831 | n.b. | n.b. |

| | | | | |
|---|---|---|---|---|
| * = keine Hautbildung erfolgt; unvollständige Aushärtung | | | | |

Die Lagerung der Massen erfolgte jeweils unter Lichtausschluss im Dunkeln.

Die in Tabelle 2 beschriebenen Massen wurden zum einen kurz nach der Herstellung ohne zusätzliche Lagerzeiten dosiert und bestrahlt. Nach der Bestrahlung wurden die entsprechenden initialen Hautbildungszeiten bestimmt. Die Masse gemäß Beispiel 6 weist eine Hautbildungszeit von 29 s auf. Ein Verzicht auf den Säurebildner (C) gemäß Vergleichsbeispiel 8 oder die Silankomponente (A) gemäß Vergleichsbeispiel 9 führt zu sehr langen Hautbildungszeiten. Zudem härten die Massen der Vergleichsbeispiele 8 und 9 selbst nach längerer Zeit nicht vollständig aus. Vergleichsbeispiel 7 zeigt, dass ohne Zusatz der Silankomponente (B) als Feuchtefänger eine Verkürzung der Hautbildungszeit nach offener Dunkellagerung der Masse in Gegenwart von Luftfeuchtigkeit nach 7 Tagen eintritt. Eine zusätzliche Verkürzung der Hautbildungszeit tritt bei einer Lagerung der Masse aus Vergleichsbeispiel 7 bei 36 °C auf. Nach anschließendem Dosieren und Belichten erfolgt eine Hautbildung schon innerhalb von 13 s und damit wesentlich schneller als mit der erfindungsgemäßen Masse 6. Die Massen aus den Vergleichsbeispielen 8 und 9 zeigen nach Lagerung bei 36 °C und Bestrahlung keine Hautbildung und härten nicht mehr vollständig aus.

Die erfindungsgemäße Masse 6 bleibt dagegen auch nach mehr als 7 Tagen offener Lagerung im Dunkeln und in Anwesenheit von Feuchtigkeit im flüssigen Zustand und zeigt nach Bestrahlung eine vergleichbare Hautbildungszeit und Aushärtungscharakteristik wie nach initialer Bestrahlung, ohne Lagerung. Ferner kann die Masse gemäß Beispiel 6 auch bei einer erhöhten Temperatur von 36 °C für mindestens 10 Tage gelagert werden, ohne dass sich die Viskosität und Aushärtungscharakteristik signifikant verändern. Die konstanten Hautbildungszeiten erlauben im Rahmen von Voraktivierungsprozessen stabile Offenzeitfenster.

**Tabelle 3: Photoaktivierung in Kartusche**

| | Masse gemäß Beispiel 2 | | | | |
|---|---|---|---|---|---|
| Zeit nach Belichtung [d] | 0 | 1 | 2 | 5 | 14 |
| Hautbildungszeit [s] | 10 | 10 | 11 | 11 | 11 |
| Druckscherfestigkeit Glas/Glas [MPa] | 0,9 | n.B. | n.B. | n.B. | 0,9 |
| Reißdehnung [%] | 91 | n.B. | n.B. | n.B. | 88 |
| Kohäsion [MPa] | 0,20 | n.B. | n.B. | n.B. | 0,21 |

| | | | | | |
|---|---|---|---|---|---|
| n.B. = nicht bestimmt | | | | | |

Tabelle 3 zeigt die Hautbildungszeiten und Druckscherfestigkeiten der erfindungsgemäßen Masse aus Beispiel 2 nach Photoaktivierung und anschließender Dosierung in einem zeitlichen Abstand von bis zu zwei Wochen. Die Photoaktivierung erfolgte dabei durch Bestrahlung der Massen in einer Kartusche von allen Seiten über einen Zeitraum von 240 s mit einer Intensität von 200 mW/cm². Die Kartusche mit der aktivierten Masse wurde anschließend bei Raumtemperatur unter Licht- und Feuchtigkeitsausschluss gelagert. Die Prüfung der mechanischen Eigenschaften der Masse nach dem Verkleben erfolgte jeweils nach 7 Tagen Lagerung der Prüfkörper in Gegenwart von Luftfeuchtigkeit.

Auch nach längerer Verweilzeit der aktivierten Massen in der Kartusche bleiben die Hautbildungszeiten unverändert. Selbst 14 Tage nach der Photoaktivierung ergeben sich Hautbildungszeiten, die mit den Hautbildungszeiten unmittelbar nach Aktivierung vergleichbar sind. Die mechanischen Eigenschaften wie Druckscherfestigkeit, Reißdehnung und Kohäsion bleiben ebenfalls konstant.

**Tabelle 4: Haftungsaufbau**

| | Beispiel 2 | Beispiel 10 | Vergleichsbeispiel 11 | Vergleichsbeispiel 12 |
|---|---|---|---|---|
| **Komponente (A)** | | | | |
| Silan 1 | 65 | 40 | 65 | 65 |
| Silan 4 | - | 25 | - | - |

| **Komponente (B)** | | | | |
|---|---|---|---|---|
| Silan 2 | 5 | 5 | 5 | 5 |
| Silan 3 | 1,5 | 1,5 | 1,5 | 1,5 |

| **Komponente (C)** | | | | |
|---|---|---|---|---|
| Photoinitiator 1 | 0,1 | 0,1 | 0,1 | 0,1 |

| **Komponenten (D)** | | | | |
|---|---|---|---|---|
| Weichmacher | 28,0 | 28,0 | 27,9 | 27,7 |
| Stabilisator | 0,4 | 0,4 | 0,4 | 0,4 |
| γ-Aminopropyltrimethoxysilan | - | - | - | 0,3 |
| DBTL (Dibutylzinndilaurat) | - | - | 0,1 | |
| Hautbildungszeit nach Belichtung 4s @ 100 mW/cm² | 6s | 10s | 135 s | ∼ 60 min |
| Scherfestigkeit, 60s nach Fügen | 68 N | 209 N | * | * |
| Habitus nach 24 h Lagerung | flüssig | flüssig | verdickt | ausgehärtet |

| | | | | |
|---|---|---|---|---|
| * nicht messbar; Masse noch flüssig. | | | | |

Die Lagerung der Massen erfolgte unter Lichtausschluss in Gegenwart von Luftfeuchtigkeit.

Tabelle 4 zeigt die Hautbildungszeiten und Handfestigkeiten der erfindungsgemäßen Massen im Vergleich zu Massen, die zur Katalyse der Feuchtigkeitshärtung zusätzlich Katalysatoren wie DBTL oder ein Aminosilan enthalten. Die Zugabe von DBTL (Vergleichsbeispiel 11) oder von γ-Aminopropyltrimethoxysilan (Vergleichsbeispiel 12) führt zu einer deutlichen Verlangsamung der Hautbildung nach Belichtung. Ferner sind nach 60 s keine Festigkeiten bestimmbar, da die Massen zu diesem Zeitpunkt noch flüssig sind. Die erfindungsgemäßen Massen gemäß den Beispielen 2 und 10 bilden dagegen nach Belichtung innerhalb weniger Sekunden eine Haut. Gleichzeitig erreichen diese Massen innerhalb von 60 s eine ausreichende Handfestigkeit. Ohne Belichtung und nach Lagerung in Gegenwart von Luftfeuchtigkeit für 24 h ist die Masse aus Vergleichsbeispiel 12 vollständig ausgehärtet und die Masse aus Vergleichsbeispiel 11 stark verdickt, wohingegen die erfindungsgemäßen Massen im flüssigen Zustand bleiben.

## Patentansprüche

1. Einkomponentige, bei Raumtemperatur flüssige und durch Feuchtigkeit härtende Masse mit:
(A) mindestens einer mindestens difunktionellen Silanverbindung, die mindestens zwei Alkoxysilangruppen aufweist,
(B) mindestens einer monofunktionellen Silanverbindung, die eine einzelne Alkoxysilangruppe aufweist, und/oder Derivate der monofunktionellen Silanverbindung mit teilkondensierten oder verbrückten Alkoxysilangruppen; und
(C) wenigstens einem Säurebildner, der unter Einwirkung von Wärme und/oder aktinischer Strahlung aktivierbar ist und eine Säure freisetzt;
wobei die Masse außer dem Säurebildner keine weiteren Katalysatoren für die Feuchtigkeitshärtung von Alkoxysilanen enthält,
wobei die Masse nach Aktivierung des Säurebildners in Gegenwart von Feuchtigkeit aushärtet, jedoch vor Aktivierung des Säurebildners bei Raumtemperatur in Gegenwart von Luftfeuchtigkeit über einen Zeitraum von mindestens 24 Stunden flüssig bleibt, und
wobei die mindestens difunktionelle Silanverbindung eine oder mehrere mindestens difunktionelle α-Alkoxysilanverbindungen umfasst.

2. Masse nach Anspruch 1, **dadurch gekennzeichnet, dass** die Masse vor Aktivierung des Säurebildners bei Raumtemperatur in Gegenwart von Luftfeuchtigkeit über mindestens 3, bevorzugt mindestens 7 Tagen flüssig bleibt.

3. Masse nach Anspruch 2, **dadurch gekennzeichnet, dass** die α-Alkoxysilanverbindung der folgenden Formel (I) entspricht: 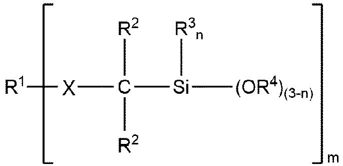 in der
R¹ ein wenigstens zweibindiger organischer Rest ist,
jedes R² unabhängig ein aus der aus Wasserstoff, linearen, verzweigten, zyklischen, gesättigten, ungesättigten und aromatische Kohlenwasserstoffen bestehenden Gruppe ausgewählter monovalenter Rest ist, der gegebenenfalls halogensubstituiert und/oder durch 1-3 Heteroatome unterbrochen sein kann,
jedes R³ unabhängig ein monovalenter Rest ist, der aus der Gruppe der linearen, verzweigten, zyklischen, gesättigten, ungesättigten und aromatischen Kohlenwasserstoffen ausgewählt ist, und der gegebenenfalls halogensubstituiert oder durch 1 bis 3 Heteroatome unterbrochen sein kann,
jedes R⁴ unabhängig ein aus der aus Wasserstoff, linearen, verzweigten, zyklischen, gesättigten, ungesättigten und aromatische Kohlenwasserstoffen bestehenden Gruppe ausgewählter monovalenter Rest ist, der wahlweise halogensubstituiert oder durch 1-3 Heteroatome unterbrochen sein kann,
X ein heteroatomhaltiger zwei- oder dreibindiger Rest ist, der durch ein Heteroatom, insbesondere Sauerstoff, Stickstoff oder Schwefel, an die Gruppe -CR²₂-SiR³ₙ(OR⁴)(₃₋ₙ) gebunden ist,
m mindestens 2, bevorzugt 2 bis 9, weiter bevorzugt 2 bis 4 ist; und
n = 0 bis 2 ist.

4. Masse nach Anspruch 3, **dadurch gekennzeichnet, dass** der Rest R¹ ein aus der aus (i) linearen oder verzweigten, gesättigten oder ungesättigten Alkylresten mit 1 bis 8 C-Atomen, gegebenenfalls unterbrochen durch 1 bis 3 Heteroatome, (ii) gesättigten oder ungesättigten Cycloalkylresten mit 3-9 C-Atomen, gegebenenfalls unterbrochen durch 1 bis 3 Heteroatomen, (iii) aromatischen Resten mit 5 bis 10 C-Atomen, (iv) Polyolefin, Polyether, Polyamid, Polyester, Polycarbonat, Polyurethan, Polyharnstoff, Siloxane, Polybutadiene, hydrierte Polybutadiene oder Polyacrylat bestehenden Gruppen ausgewählter Rest ist, wobei R¹ jeweils unsubstituiert sein oder weitere Substituenten tragen kann.

5. Masse nach einem der vorhergehenden Ansprüche, **dadurch gekennzeichnet, dass** die mindestens difunktionelle Silanverbindung eine mindestens difunktionelle Alkoxysilanverbindung mit wenigstens zwei Alkoxysilangruppen aufweist, wobei die Alkoxysilangruppen ein über eine Alkylengruppe an ein Heteroatom gebundenes Si-Atom umfassen, wobei die Alkylengruppe mindestens zwei C-Brückenatome aufweist, bevorzugt 3 bis 6 C-Brückenatome.

6. Massen nach Anspruch 5, **dadurch gekennzeichnet, dass** die mindestens difunktionelle Alkoxysilanverbindung der allgemeinen Formel (II) entspricht: 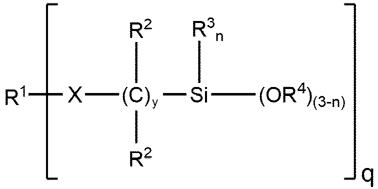
worin R¹, R², R³, R⁴ wie oben definiert sind.
X ein heteroatomhaltiger zwei- oder dreibindiger Rest ist, der durch ein Heteroatom, insbesondere Sauerstoff, Stickstoff oder Schwefel, an die Gruppe -(CR₂²)_{y}-SiR³ₙ(OR⁴)₍₃₋ₙ₎ gebunden ist,
n = 0-2 ist,
q = 2-9 ist, vorzugsweise 2-4 und
y = 2-6 ist, vorzugsweise y = 3.

7. Masse nach einem der vorhergehenden Ansprüche 1 bis 6, **dadurch gekennzeichnet, dass** die Komponente (A) die α-Alkoxysilanverbindung in einem Anteil von mindestens 10 Gewichtsprozent enthält, bevorzugt in einem Anteil von 50 bis 100 Gewichtsprozent.

8. Masse nach einem der vorhergehenden Ansprüche, **dadurch gekennzeichnet, dass** die monofunktionelle Alkoxysilanverbindung der allgemeinen Formel (III) entspricht: 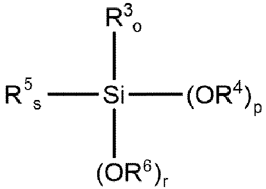 worin
R³ und R⁴ wie oben definiert sind;
R⁵ unabhängig ein monovalenter organischer Rest ist, der aus der Gruppe der linearen, verzweigten, zyklischen, gesättigten, ungesättigten und aromatischen Kohlenwasserstoffen ausgewählt ist, und wahlweise durch Heteroatome substituiert und oder durch Heteroatome unterbrochen sein kann und von R³ verschieden ist;
R⁶ ein Si-Rest ist, an den weitere Reste gemäß Formel (III) verknüpft sein können, wobei
o eine ganze Zahl von 0 bis 3 ist,
p eine ganze Zahl von 1 bis 3 ist,
s eine ganze Zahl von 0 bis 3 und
r eine ganze Zahl von 0 bis 2 ist, wobei die Summe aus o + p + s + r = 4 ist.

9. Masse nach einem der vorhergehenden Ansprüche, **dadurch gekennzeichnet, dass** der Säurebildner eine photolatente Säure umfasst, bevorzugt eine photolatente Säure, die durch aktinische Strahlung in einem Wellenlängenbereich von 200 bis 480 nm aktivierbar ist.

10. Masse nach Anspruch 9, **dadurch gekennzeichnet, dass** die photolatente Säure aus der aus Oniumsalzen, Oximestern, Triazinen, Benzoinestern bestehenden Gruppe ausgewählt ist.

11. Masse nach einem der vorhergehenden Ansprüche, bestehend aus:
(A) 10 bis 99 Masseanteilen der mindestens difunktionellen Alkoxysilanverbindung;
(B) 0,1 bis 30 Masseanteilen der monofunktionellen Alkoxysilanverbindung;
(C) 0,0001-5 Masseanteilen des mindestens einen Säurebildners, bevorzugt 0,001 bis 2 Gewichtsprozent, höchstens 1 Gewichtsprozent, höchstens 0,5 Gewichtsprozent oder höchstens 0,3 Gewichtsprozent;
(D) 0-70 Masseanteilen wenigstens eines Additivs, ausgewählt aus der Gruppe der Füllstoffe, Farbstoffe, Pigmente, Photosensibilisatoren, Alterungsschutzmittel Fluoreszenzmittel, Stabilisatoren, Feuchtigkeitsfänger, Beschleuniger, Haftvermittler, Vernetzer, Fließverbesserer, Benetzungsmittel, Thixotropierungsmittel, Verdünnungsmittel, Flexibilisierer, polymeren Verdickungsmittel, Flammschutzmittel, Korrosionsinhibitoren, Weichmacher und Tackyfier, allein oder in Kombination miteinander
wobei die Masseanteile der Komponenten (A) bis (D) 100 ergeben.

12. Masse nach einem der vorhergehenden Ansprüche, **dadurch gekennzeichnet, dass** die Masse eine Hautbildungszeit von weniger als 5 min aufweist, nach Aktivierung des Säurebildners und Zutritt von Luftfeuchtigkeit.

13. Verfahren zum Fügen oder Vergießen von Substraten unter Verwendung der Masse gemäß einem der vorhergehenden Ansprüche, wobei das Verfahren die folgenden Schritte umfasst:
Dosieren der Masse auf ein Substrat;
Aktivieren der Masse auf dem Substrat unter Freisetzung einer Säure aus dem Säurebildner und unter Zutritt von Feuchtigkeit;
Zuführen eines zweiten Substrat auf die bestrahlte Masse innerhalb einer Offenzeit unter Bildung einer Klebschicht; und
Einhalten einer Wartezeit bis zum Erreichen einer Handfestigkeit der Klebschicht;
wobei die Zeit zwischen Dosieren und Aktivieren der Masse in Gegenwart von Feuchtigkeit 24 Stunden oder länger betragen kann, wobei die Hautbildungszeit weniger als 5 Minuten beträgt und die Wartezeit in einem Bereich von 1 Sekunde bis 2 Minuten liegt.

14. Verfahren zum Fügen oder Vergießen von Bauteilen unter Verwendung der Masse gemäß einem der Ansprüche 1 bis 12, **dadurch gekennzeichnet, dass** die Masse unter Ausschluss von Feuchtigkeit durch Belichten mit aktinischer Strahlung und/oder Erwärmen auf eine Temperatur oberhalb einer Zersetzungstemperatur des Säurebildners aktiviert wird.

15. Verfahren nach Anspruch 14, **dadurch gekennzeichnet, dass** die Masse in einer Durchflussapparatur aktiviert wird.

16. Verfahren nach Anspruch 14 oder 15, **dadurch gekennzeichnet, dass** die aktivierte Masse unter Ausschluss von Feuchtigkeit bei Raumtemperatur mindestens 24 h, bevorzugt mindestens 3 Tage, besonders bevorzugt mindestens 7 Tage im flüssigen Zustand bleibt.

17. Verwendung der Masse gemäß einem der Ansprüche 1 bis 12 als Kleb- oder Dichtstoff für das Verkleben, Vergießen, Abdichten und Beschichten von Substraten.

18. Verwendung einer Masse gemäß einem der Ansprüche 1 bis 12 als Kleb-oder Dichtstoff für die Fixierung oder das Vergießen von Bauteilen, insbesondere für Bauteile, die nicht durchstrahlbar sind oder wenigstens eine Schattenzone oder Kapillarspalten aufweisen, in denen durch unzureichende Belichtung keine Strahlenhärtung durchführbar ist.

## Claims

1. A one-part composition that is liquid at room temperature and moisture-curing, comprising:
(A) at least one at least bifunctional silane compound having at least two alkoxysilane groups,
(B) at least one monofunctional silane compound having one single alkoxysilane group, and/or derivatives of the monofunctional silane compound with partially condensed or bridged alkoxysilane groups; and
(C) at least one acid generator that is activatable upon exposure to heat and/or actinic radiation and releases an acid;
wherein the composition, apart from the acid generator, does not contain any further catalysts for moisture-curing of alkoxysilanes,
wherein the composition, after activation of the acid generator, cures in the presence of moisture but remains liquid over a period of at least 24 hours at room temperature in the presence of humidity prior to activation of the acid generator, and
wherein the at least bifunctional silane compound comprises one or more at least bifunctional α-alkoxysilane compounds.

2. The composition according to claim 1, **characterized in that** the composition remains liquid for at least 3, preferably at least 7 days at room temperature in the presence of humidity prior to activation of the acid generator.

3. The composition according to claim 2, **characterized in that** the α-alkoxysilane compound corresponds to the following formula (I): 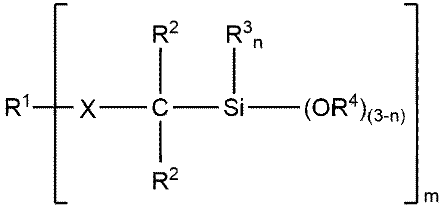 wherein
R¹ is an at least divalent organic residue,
each R², independently, is a monovalent residue that is selected from the group consisting of hydrogen, linear, branched, cyclic, saturated, unsaturated and aromatic hydrocarbons and, optionally, may be halogen-substituted and/or interrupted by 1-3 heteroatoms,
each R³, independently, is a monovalent residue that is selected from the group of linear, branched, cyclic, saturated, unsaturated and aromatic hydrocarbons and, optionally, may be halogen-substituted or interrupted by 1 to 3 heteroatoms,
each R⁴, independently, is a monovalent residue that is selected from the group consisting of hydrogen, linear, branched, cyclic, saturated, unsaturated and aromatic hydrocarbons and may optionally be halogen-substituted or interrupted by 1-3 heteroatoms,
X is a heteroatom-containing di-or trivalent residue that is linked, via a heteroatom, in particular oxygen, nitrogen or sulfur, to the -CR²₂-SiR³ₙ(OR⁴)(₃₋ₙ) group,
m is at least 2, preferably 2 to 9, more preferably 2 to 4; and
n = 0 to 2.

4. The composition according to claim 3, **characterized in that** R¹ is a residue selected from the groups consisting of (i) linear or branched, saturated or unsaturated alkyl residues having 1 to 8 C atoms, optionally interrupted by 1 to 3 heteroatoms, (ii) saturated or unsaturated cycloalkyl residues having 3-9 C atoms, optionally interrupted by 1 to 3 heteroatoms, (iii) aromatic residues having 5 to 10 C atoms, (iv) polyolefin, polyether, polyamide, polyester, polycarbonate, polyurethane, polyurea, siloxanes, polybutadienes, hydrogenated polybutadienes or polyacrylate, wherein each R¹ can be unsubstituted or bear further substituents.

5. The composition according to any one of the preceding claims, **characterized in that** the at least bifunctional silane compound has an at least bifunctional alkoxysilane compound with at least two alkoxysilane groups, wherein the alkoxysilane groups comprise a Si-atom linked, via an alkylene group, to a heteroatom, wherein the alkylene group has at least two C bridge atoms, preferably 3 to 6 C bridge atoms.

6. The compositions according to claim 5, **characterized in that** the at least bifunctional alkoxysilane compound corresponds to the general formula (II): 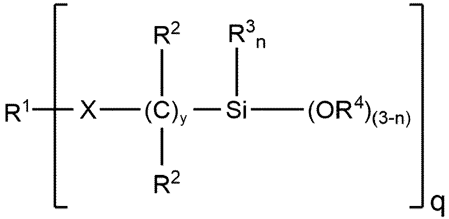
wherein R¹, R², R³ and R⁴ are as defined above,
X is a heteroatom-containing di- or trivalent residue linked, via a heteroatom, in particular oxygen, nitrogen or sulfur, to the -(CR₂²)_{y}-SiR³ₙ(OR⁴)₍₃₋ₙ₎ group,
n = 0-2,
q = 2-9, preferably 2-4, and
y = 2-6, preferably y = 3.

7. The composition according to any one of the preceding claims 1 to 6, **characterized in that** component (A) contains the α-alkoxysilane compound in a proportion of at least 10 weight percent, preferably in a proportion of 50 to 100 weight percent.

8. The composition according to any one of the preceding claims, **characterized in that** the monofunctional alkoxysilane compound corresponds to the general formula (III): 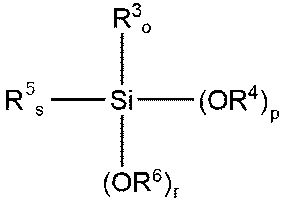 wherein
R³ and R⁴ are as defined above;
R⁵, independently, is a monovalent organic residue that is selected from the group of linear, branched, cyclic, saturated, unsaturated and aromatic hydrocarbons and may optionally be substituted by heteroatoms and/or interrupted by heteroatoms and is different from R³;
R⁶ is a Si-residue to which further residues according to formula (III) may be connected, wherein
o is an integer from 0 to 3,
p is an integer from 1 to 3,
s is an integer from 0 to 3, and
r is an integer from 0 to 2, with the sum of o + p + s + r = 4.

9. The composition according to any one of the preceding claims, **characterized in that** the acid generator comprises a photolatent acid, preferably a photolatent acid which is activatable by actinic radiation of a wavelength ranging from 200 to 480 nm.

10. The composition according to claim 9, **characterized in that** the photolatent acid is selected from the group consisting of onium salts, oxime esters, triazines, benzoin esters.

11. The composition according to any one of the preceding claims, consisting of:
(A) 10 to 99 mass fractions of the at least bifunctional alkoxysilane compound;
(B) 0.1 to 30 mass fractions of the monofunctional alkoxysilane compound;
(C) 0.0001-5 mass fractions of the at least one acid generator, preferably 0.001 to 2 weight percent, at most 1 weight percent, at most 0.5 weight percent or at most 0.3 weight percent;
(D) 0-70 mass fractions of at least one additive, selected from the group of fillers, coloring agents, pigments, photosensitizers, anti-ageing agents, fluorescent agents, stabilizers, moisture scavengers, accelerators, adhesion promoters, crosslinkers, flow improvers, wetting agents, thixotropic agents, diluents, flexibilizers, polymeric thickening agents, flame retardants, corrosion inhibitors, plasticizers and tackifiers, alone or in combination with each other,
wherein the mass fractions of components (A) to (D) total 100.

12. The composition according to any one of the preceding claims, **characterized in that** the composition has a skin formation time of less than 5 min after activation of the acid generator and ingress of humidity.

13. A method of joining or casting substrates using the composition according to any one of the preceding claims, the method comprising the following steps:
dosing the composition onto a substrate;
activating the composition on the substrate to release an acid from the acid generator, in the presence of moisture;
supplying a second substrate to the irradiated composition within an open time to form a bonding layer; and
observing a waiting time until working strength of the bonding layer is achieved;
wherein the time between dosing and activation of the composition in the presence of moisture can be 24 hours or more, with the skin formation time being less than 5 minutes and the waiting time ranging from 1 second to 2 minutes.

14. A method of joining or casting structural elements using the composition according to any one of claims 1 to 12, **characterized in that**, while excluding moisture, the composition is activated by exposure to actinic radiation and/or heating to a temperature above a decomposition temperature of the acid generator.

15. The method according to claim 14, **characterized in that** the composition is activated in a flow apparatus.

16. The method according to claim 14 or 15, **characterized in that**, with moisture excluded, the activated composition remains in the liquid state at room temperature for at least 24 h, preferably at least 3 days, particularly preferably at least 7 days.

17. A use of the composition according to any of claims 1 to 12 as an adhesive or sealant for bonding, casting, sealing and coating of substrates.

18. A use of a composition according to any of claims 1 to 12 as an adhesive or sealant for fixing or casting of structural elements, in particular structural elements which are non-radiolucent or have at least a shadow zone or capillary slots in which, due to insufficient irradiation, no radiation curing can be performed.

## Revendications

1. Masse à un composant, liquide à température ambiante et durcissant à l'humidité, comprenant :
(A) au moins un composé de silane au moins difonctionnel qui présente au moins deux groupes alcoxysilane,
(B) au moins un composé de silane monofonctionnel qui présente un groupe alcoxysilane individuel et/ou des dérivés du composé de silane monofonctionnel comprenant des groupes alcoxysilane partiellement condensés ou pontés ; et
(C) au moins un acidificateur qui est apte à être activé sous l'effet de chaleur et/ou d'un rayonnement actinique et qui libère un acide ;
la masse, hormis l'acidificateur, ne contenant pas d'autres catalyseurs pour le durcissement à l'humidité d'alcoxysilanes,
la masse durcissant après l'activation de l'acidificateur en présence d'humidité, mais restant liquide pendant une période d'au moins 24 heures à température ambiante en présence d'humidité d'air avant l'activation de l'acidificateur, et
ledit au moins un composé de silane difonctionnel comprenant un ou plusieurs composés d'a-alcoxysilane au moins difonnctionnels.

2. Masse selon la revendication 1, **caractérisée en ce que** la masse reste liquide pendant au moins 3, de préférence au moins 7 jours à température ambiante en présence d'humidité d'air avant l'activation de l'acidificateur.

3. Masse selon la revendication 2, **caractérisée en ce que** le composé d'α-alcoxysilane correspond à la formule (I) suivante : 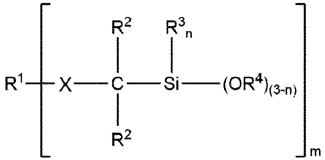 dans laquelle
R¹ est un radical organique au moins à liaison double,
chaque R² est indépendamment un radical monovalent qui est choisi dans le groupe constitué d'hydrogène, d'hydrocarbures linéaires, ramifiés, cycliques, saturés, non saturés et aromatiques, et qui, le cas échéant, peut être substitué par halogène et/ou être interrompu par 1-3 hétéroatomes,
chaque R³ est indépendamment un radical monovalent qui est choisi dans le groupes des hydrocarbures linéaires, ramifiés, cycliques, saturés, non saturés et aromatiques et qui, le cas échéant, peut être substitué par halogène et/ou être interrompu par 1-3 hétéroatomes,
chaque R⁴ est indépendamment un radical monovalent qui est choisi dans le groupe constitué d'hydrogène, d'hydrocarbures linéaires, ramifiés, cycliques, saturés, non saturés et aromatiques, et qui peut sélectivement être substitué par halogène et/ou être interrompu par 1-3 hétéroatomes,
X est un radical à deux ou trois liaisons contenant des hétéroatomes, qui est lié au groupe -CR²₂-SiR³ₙ(OR⁴)(₃₋ₙ) par un hétéroatome, en particulier de l'oxygène, de l'azote ou du soufre,
m est au moins 2, de préférence 2 à 9, de manière plus préférée 2 à 4 ; et
n = 0 à 2.

4. Masse selon la revendication 3, **caractérisée en ce que** le radical R¹ est un radical choisi dans le groupe constitué (i) de radicaux alkyles linéaires ou ramifiés, saturés ou non saturés présentant 1 à 8 atomes de carbone, interrompus, le cas échéant, par 1 à 3 hétéroatomes, (ii) de radicaux cycloalkyles saturés ou non saturés présentant 3 à 9 atomes de carbone, interrompus, le cas échéant, par 1 à 3 hétéroatomes, (iii) de radicaux aromatiques présentant 5 à 10 atomes de carbone, (iv) de polyoléfine, de polyéther, de polyamide, de polyester, de polycarbonate, de polyuréthane, de polyurée, de siloxane, de polybutadiène, de polybutadiène hydrogéné ou de polyacrylate, R¹ pouvant respectivement être non substitué ou pouvant porter d'autres substituants.

5. Masse selon l'une des revendications précédentes, **caractérisée en ce que** le composé de silane au moins difonctionnel présente un composé d'alkoxysilane au moins difonctionnel présentant au moins deux groupes alkoxysilane, les groupes alkoxysilane comprenant un atome de Si lié à un hétéroatome par un groupe alkylène, le groupe alkylène présentant au moins deux atomes pontés de carbone, de préférence 3 à 6 atomes pontés de carbone.

6. Masse selon la revendication 5, **caractérisée en ce que** le composé d'alkoxysilane au moins difonctionnel correspond à la formule générale (II) suivante : 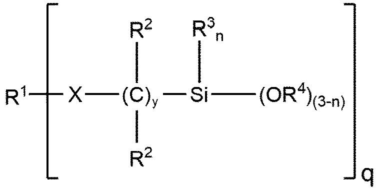
R¹, R², R³, R⁴ étant définis comme ci-dessus,
X étant un radical à deux ou trois liaisons contenant des hétéroatomes, qui est lié au groupe -(CR₂²)_{y}-SiR³ₙ(OR⁴)₍₃₋ₙ₎ par un hétéroatome, en particulier de l'oxygène, de l'azote ou du soufre,
n = 0-2,
q = 2-9, de préférence 2-4, et
y = 2-6, de préférence y = 3.

7. Masse selon l'une des revendications 1 à 6, **caractérisée en ce que** le composant (A) contient le composé d'a-alcoxysilane dans une proportion d'au moins 10 pour cent en poids, de préférence dans une proportion de 50 à 100 pour cent en poids.

8. Masse selon l'une des revendications précédentes, **caractérisée en ce que** le composé d'alkoxysilane monofonctionnel correspond à la formule générale (III) suivante : 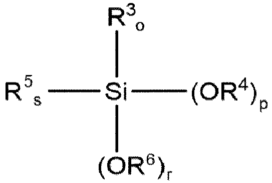 dans laquelle
R³ et R⁴ sont définis comme ci-dessus ;
R⁵ est indépendamment un radical organique monovalent qui est choisi dans le groupe des hydrocarbures linéaires, ramifiés, cycliques, saturés, non-saturés et aromatiques et qui peut sélectivement être substitué par des hétéroatomes ou être interrompu par des hétéroatomes et qui est différent de R³ ;
R⁶ est un radical de Si auquel d'autres radicaux selon la formule (III) peuvent être reliés,
o étant un nombre entier de 0 à 3,
p étant un nombre entier de 1 à 3,
s étant un nombre entier de 0 à 3, et
r étant un nombre entier de 0 à 2, avec la somme de o + p + s + r = 4.

9. Masse selon l'une des revendications précédentes, **caractérisée en ce que** l'acidificateur comprend un acide photolatent, de préférence un acide photolatent qui est apte à être activé par rayonnement actinique dans une gamme de longueurs d'ondes de 200 à 480 nm.

10. Masse selon la revendication 9, **caractérisée en ce que** l'acide photolatent est choisi dans le groupe constitué de sels d'onium, d'esters d'oxime, de triazines, d'esters de benzoïne.

11. Masse selon l'une des revendications précédentes, composée de :
(A) 10 à 99 parties en masse du composé d'alkoxysilane au moins difonctionnel ;
(B) 0,1 à 30 parties en masse du composé d'alkoxysilane monofonctionnel ;
(C) 0,0001 à 5 parties en masse dudit au moins acidificateur, de préférence 0,001 à 2 pour cent en poids, au maximum 1 pour cent en poids, au maximum 0,5 pour cent en poids ou au maximum 0,3 pour cent en poids ;
(D) 0 à 70 parties en masse d'au moins un additif choisi dans le groupe des matières de charge, des colorants, des pigments, des photosensibilisateurs, des agents antivieillissement, des agents fluorescents, des stabilisateurs, des collecteurs d'humidité, des accélérateurs, des agents adhésifs, des agents de réticulation, des agents d'amélioration d'écoulement, des agents mouillants, des agents de thixotropie, des agents de dilution, des flexibilisateurs, des agents d'épaississement polymères, des agents ignifuges, des inhibiteurs de corrosion, des plastifiants et des agents tackifiants, seuls ou en combinaison les uns avec les autres.
les parties en masse des composants (A) à (D) ayant un total égal à 100.

12. Masse selon l'une des revendications précédentes, **caractérisée en ce que** la masse présente un temps de formation de peau de moins de 5 min après l'activation de l'acidificateur et la pénétration d'humidité.

13. Procédé d'assemblage ou de coulage de substrats en utilisant la masse selon l'une des revendications précédentes, le procédé comprenant les étapes suivantes :
dosage de la masse sur un substrat ;
activation de la masse sur le substrat par libération d'un acide de l'acidificateur et l'entrée d'humidité ;
amenée d'un deuxième substrat sur la masse irradiée pendant un temps d'ouverture de manière à former une couche adhésive ; et
respect d'un temps d'attente jusqu'à l'obtention de la résistance à l'usinage de la couche adhésive ;
le temps entre le dosage et l'activation de la masse en présence d'humidité pouvant être égal à 24 heures ou plus, le temps de formation de peau étant inférieur à 5 minutes, et le temps d'attente étant dans une plage de 1 seconde à 2 minutes.

14. Procédé d'assemblage ou de coulage d'éléments structurels en utilisant la masse selon l'une des revendications 1 à 12, **caractérisée en ce que** la masse est activée, à l'exclusion d'humidité, par exposition à un rayonnement actinique et/ou par chauffage à une température supérieure à une température de décomposition de l'acidificateur.

15. Procédé selon la revendication 14, **caractérisée en ce que** la masse est activée dans un appareillage d'écoulement.

16. Procédé selon la revendication 14 ou 15, **caractérisée en ce que** la masse activée reste à l'état liquide pendant au moins 24h, de préférence au moins 3 jours, de manière particulièrement préférée au moins 7 jours à température ambiante, à l'exclusion d'humidité.

17. Utilisation de la masse selon l'une des revendications 1 à 12 en tant qu'agent adhésif ou d'étanchéité pour le collage, le coulage, l'étanchement et le revêtement de substrats.

18. Utilisation d'une masse selon l'une des revendications 1 à 12 en tant qu'agent adhésif ou d'étanchéité pour la fixation ou le coulage d'éléments structurels, en particulier pour des éléments structurels qui ne peuvent pas être traversés par des rayonnements ou présentent au moins une zone d'ombre ou des fentes capillaires dans lesquelles un durcissement par rayonnement n'est pas réalisable en raison d'une irradiation insuffisante.
